# EUROPEAN PATENT SPECIFICATION

(11) **EP 4 319 116 B1**
(45) Date of publication and mention of the grant of the patent: **03.12.2025**
(21) Application number: 22803850.1
(22) Date of filing: 11.05.2022
(51) Int. Cl.: H04R 3/00, H04M 1/60, H04M 1/72442

(54) **VOLUME ADJUSTMENT METHOD AND TERMINAL DEVICE**
VOLUMENANPASSUNGSVERFAHREN UND ENDGERÄTEVORRICHTUNG
PROCÉDÉ DE RÉGLAGE DE VOLUME ET DISPOSITIF TERMINAL

(30) Priority: 18.05.2021 CN 202110542164
(43) Date of publication of application: 07.02.2024
(73) Proprietor: Honor Device Co., Ltd., Shenzhen, Guangdong 518040 (CN)
(72) Inventor: LI, Zhan, Shenzhen, Guangdong 518040 (CN)
(74) Representative: Gill Jennings & Every LLP
(86) International application number: PCT/CN2022/092280
(87) International publication number: WO 2022/242528

(56) References cited:
- CN-A- 105 427 874
- CN-A- 111 182 390
- CN-A- 112 073 865
- CN-A- 112 614 322
- CN-A- 113 438 356
- CN-A- 113 504 887
- KR-A- 20030 036 426

## Description

### TECHNICAL FIELD

This application relates to the terminal field, and in particular to a volume adjustment method and a terminal device.

### BACKGROUND

At present, there are a plurality of types of audio playback devices (for example, earphones, and loudspeaker boxes) on the market. The audio playback device may receive an electrical signal sent from a media player or a receiver, and may convert the electrical signal into an audible sound wave by using a speaker. Currently, the audio playback devices may be classified into a wired audio playback device and a wireless audio playback device (a pair of wireless earphones, a wireless speaker, or the like). The wireless audio playback device may communicate with a terminal through a wireless communication protocol (for example, Bluetooth (Bluetooth, BT)). Compared to the wired audio playback device, the wireless audio playback device is easy to use without packing a data line.

The wireless audio playback device may establish a connection to a terminal device and convert, into an audible sound wave, an audio signal transmitted by the terminal device. However, if a playback volume of the terminal device does not conform to a use habit of a user, the user needs to manually adjust the playback volume of the terminal device. This leads to complicated operations and affects user experience. KR20030036426A discloses a hands-free system for vehicles that standardizes audio levels across phone models.

### SUMMARY

This application provides a volume adjustment method and a terminal device. Because a playback volume may be automatically adjusted, a user does not need to manually adjust the playback volume, and a requirement of the user for comfort can be met. This achieves effect of reducing complexity of an operation and improving user experience.

To achieve the foregoing objective, the following technical solutions are used in this application.

According to a first aspect, this application provides a volume adjustment method. The method is applied to a terminal device having a function of playing back an audio, and includes:

The terminal device obtains a first volume value in response to detecting that the terminal device establishes a communication connection to a first electronic device, where the first volume value is a volume value that conforms to a use habit of a user when the user uses a second electronic device, and the second electronic device is an electronic device that had been connected to the terminal device; and the terminal device sends a volume adjustment message to the first electronic device, where the volume adjustment message carries first volume value information for indicating the first electronic device to adjust a playback volume to a playback volume corresponding to the first volume value.

It may be learned that, when the terminal device is connected to the first electronic device, the playback volume may be automatically adjusted based on a conventional volume value (the first volume value) of the electronic device (the second electronic device) that had been connected, without being manually adjusted by the user. This achieves effect of reducing complexity of an operation. In addition, because the adjustment is performed based on a volume value conventionally used by the user, the adjusted playback volume can meet the use habit of the user, so that a requirement of the user for comfort can be met.

In an optional implementation, if a device model of the first electronic device is the same as a device model of the second electronic device, the volume adjustment message carries the first volume value. Alternatively, if a device model of the first electronic device is different from a device model of the second electronic device, the volume adjustment message carries the playback volume corresponding to the first volume value or a frequency and an amplitude that are corresponding to the first volume value.

It may be understood that, when the device model of the first electronic device is the same as the device model of the second electronic device, physical parameters (for example, output power and impedance) of the first electronic device and the second electronic device are probably the same. Therefore, playback volumes corresponding to a unit volume value are probably the same. In this way, a volume adjustment message carrying the first volume value is directly sent to the first electronic device, to adjust an output volume value of the first electronic device to the playback volume corresponding to the first volume value. When the device model of the first electronic device is different from the device model of the second electronic device, a corresponding playback volume carrying the first volume value or the frequency and the amplitude that are corresponding to the first volume value are directly sent to the first electronic device, to inform the first electronic device of the playback volume corresponding to the first volume value. This achieves effect of adjusting the output volume value of the first electronic device to the playback volume corresponding to the first volume value.

In an optional implementation, that the terminal device sends a volume adjustment message to the first electronic device includes: If the device model of the first electronic device is the same as the device model of the second electronic device, the terminal device sends the volume adjustment message to the first electronic device. The volume adjustment message carries the first volume value and an identifier of the terminal device. The volume adjustment message indicates the first electronic device to adjust a volume value output to the terminal device to the first volume value.

It may be understood that, when the device model of the first electronic device is the same as the device model of the second electronic device, physical parameters (for example, output power and impedance) of the first electronic device and the second electronic device are probably the same. Therefore, playback volumes corresponding to a unit volume value are probably the same. In this way, a volume adjustment message carrying the first volume value is directly sent to the first electronic device, to adjust the output volume value of the first electronic device to the playback volume corresponding to the first volume value.

In an optional implementation, that the terminal device sends a volume adjustment message to the first electronic device includes: If the device model of the first electronic device is different from the device model of the second electronic device, the terminal device determines the amplitude and the frequency that are corresponding to the first volume value; and the terminal device sends the volume adjustment message to the first electronic device, where the volume adjustment message carries the amplitude and the frequency, the volume adjustment message indicates the first electronic device to adjust, to a second volume value, a volume value output to the terminal device, the second volume value is a volume value that is output by the first electronic device and that satisfies the amplitude and the frequency, and a playback volume corresponding to the second volume value is the same as or approximate to the playback volume corresponding to the first volume value.

It may be understood that, a corresponding frequency and the amplitude carrying the first volume value is directly sent to the first electronic device, to inform the first electronic device of the playback volume corresponding to the first volume value. This achieves the effect of adjusting the output volume value of the first electronic device to the playback volume corresponding to the first volume value.

In an optional implementation, that the terminal device sends a volume adjustment message to the first electronic device includes: If the device model of the first electronic device is different from the device model of the second electronic device, the terminal device determines a first playback volume based on the first volume value and a pre-stored first unit volume, where the first unit volume is a playback volume corresponding to a unit volume value of the second electronic device; and the terminal device sends the volume adjustment information to the first electronic device, where the volume adjustment information carries the first playback volume, the volume adjustment information indicates the first electronic device to adjust, to a second volume value, a volume value output to the terminal device, the second volume value is a volume value that is determined by the first electronic device based on the first playback volume and a pre-stored second unit volume, the second unit volume is a playback volume corresponding to a unit volume value of the first electronic device, and a playback volume corresponding to the second volume value is the same as or approximate to the first playback volume.

In this way, the corresponding playback volume carrying the first volume value is directly sent to the first electronic device, to directly inform the first electronic device of the playback volume corresponding to the first volume value. This achieves the effect of adjusting the output volume value of the first electronic device to the playback volume corresponding to the first volume value.

In an optional implementation, the method further includes: The terminal device obtains a third volume value, where the third volume value is a volume value output to the terminal device before the first electronic device performs volume adjustment.

That the terminal device sends a volume adjustment message to the first electronic device includes: If the first volume value is different from the third volume value, the terminal device sends the volume adjustment message to the first electronic device.

It may be learned that, if the device model of the first electronic device is the same as the device model of the second electronic device, and the first volume value is different from the third volume value, it may be determined that the playback volume corresponding to the first volume value is different from a playback volume corresponding to the third volume value. It may be determined that the output volume value (the third volume value) of the first electronic device is difficult to meet the requirement of the user for comfort, and the volume adjustment information is sent to the first electronic device. In this way, the volume adjustment information may be sent only when necessary, to reduce the number of times of sending the volume adjustment information, and reduce power consumption of the terminal device.

In an optional implementation, the method further includes: The terminal device obtains a third volume value, where the third volume value is the volume output to the terminal device before the first electronic device performs volume adjustment.

That the terminal device sends a volume adjustment message to the first electronic device includes: If the amplitude corresponding to the first volume value is different from an amplitude corresponding to the third volume value and the frequency corresponding to the first volume value is different from a frequency corresponding to the third volume value, the terminal device sends the volume adjustment message to the first electronic device.

It may be learned that, if the amplitude corresponding to the first volume value is different from the amplitude corresponding to the third volume value and the frequency corresponding to the first volume value is different from the frequency corresponding to the third volume value, it may be determined that the playback volume corresponding to the first volume value is different from the playback volume corresponding to the third volume value. Therefore, it is determined that the output volume value (the third volume value) of the first electronic device is difficult to meet the requirement of the user for comfort, and the volume adjustment information is sent to the first electronic device. In this way, the volume adjustment information may be sent only when necessary, to reduce the number of times of sending the volume adjustment information, and reduce power consumption of the terminal device.

In an optional implementation, the method further includes: The terminal device obtains a third volume value, where the third volume value is the volume output to the terminal device before the first electronic device performs volume adjustment.

That the terminal device sends a volume adjustment message to the first electronic device includes: If the first playback volume is different from a playback volume corresponding to the third volume value, the terminal device sends the volume adjustment message to the first electronic device.

It may be learned that, if the first playback volume is different from the playback volume corresponding to the third volume value, it may be determined that the output volume value (the third volume value) of the first electronic device is difficult to meet the requirement of the user for comfort, and the volume adjustment information is sent to the first electronic device. In this way, the volume adjustment information may be sent only when necessary, to reduce the number of times of sending the volume adjustment information, and reduce power consumption of the terminal device.

In an optional implementation, the method further includes: obtaining an identifier of the first electronic device; querying whether there is a fourth volume value, where the fourth volume value is a volume value that conforms to a use habit of the user when the user uses the first electronic device; and the terminal device adjusts the playback volume based on the fourth volume value in response to detecting that the terminal device establishes the communication connection to the first electronic device and that the fourth volume value is queried.

That the terminal device obtains a first volume value in response to detecting that the terminal device establishes a communication connection to a first electronic device includes: The terminal device obtains the first volume value in response to detecting that the terminal device establishes the communication connection to the first electronic device and that the fourth volume value is not queried.

It may be learned that, after the mobile terminal device establishes the communication connection to the first electronic device, whether there is the conventional volume value (for example, the fourth volume value) of the first electronic device may be queried first. If there is the conventional volume value of the first electronic device, the playback volume may be directly adjusted based on the fourth volume value. If there is no conventional volume value of the first electronic device, the playback volume may be further adjusted based on the conventional volume value (for example, the first volume value) of the second electronic device. In this way, effect of quickly adjusting the playback volume to a playback volume conventionally used by the user can be achieved by specifically distinguishing a use scenario of the user.

In an optional implementation, that the terminal device obtains a first volume value includes: The terminal device queries whether there is an electronic device of which a device model is the same as the device model of the first electronic device in a pre-stored list of devices, where the pre-stored list of devices includes an identifier, a device model, and a connection time point of an electronic device that had been connected to the terminal device; if there is the electronic device of which a device model is the same as the device model of the first electronic device in the list of devices, determines the electronic device of which a device model is the same as the device model of the first electronic device as the second electronic device; if there is no electronic device of which a device model is the same as the device model of the first electronic device in the list of devices, determines an electronic device that had been connected recently as the second electronic device; and obtains a first volume value of the second electronic device.

It may be learned that, when obtaining the first volume value, the terminal device may preferentially obtain a conventional volume value of the electronic device of which a device model is the same as the device model of the first electronic device. A conventional volume value of the electronic device that had been connected recently is considered only when there is no electronic device of which a device model is the same as the device model of the first electronic device. In this way, the volume adjustment message sent by the terminal device is enabled to carry the first volume value as far as possible. Therefore, the first electronic device may directly adjust the output volume based on the first volume value. This simplifies a process of adjusting the volume.

According to a second aspect, an embodiment of this application further provides a terminal device. The terminal device includes: a wireless communication module, a memory, and one or more processors. The wireless communication module, the memory, and the processor are coupled.

The memory is configured to store computer program code, the computer program code includes computer instructions, and when the computer instructions are executed by the processor, the electronic device is enabled to perform the method according to any one of the first aspect.

According to a third aspect, a computer-readable storage medium is provided. The computer-readable storage medium includes computer instructions, and when the computer instructions are run on a terminal device, the terminal device is enabled to perform the volume adjustment method according to any one of the first aspect.

According to a fourth aspect, this application provides a computer program product, and when the computer program product is run on a terminal device, the terminal device is enabled to perform the volume adjustment method according to any one of the first aspect.

According to a fifth aspect, an embodiment of this application provides a chip system, where the chip system includes one or more interface circuits and one or more processors. The interface circuit and the processor are connected to each other by using a line. The chip system may be applied to an electronic device including a communication module and a memory. The interface circuit is configured to receive a signal from a memory of the terminal device, and send the signal to the processor, where the signal includes computer instructions stored in the memory. When the processor executes the computer instructions, the terminal device executes the method according to any one of the first aspect and the possible design implementations of the first aspect.

It may be understood that, the terminal device according to the second aspect, the computer storage medium according to the third aspect, the computer program product according to the fourth aspect, and the chip system according to the fifth aspect that are provided above are all configured to perform the corresponding method provided above. Therefore, for beneficial effects that can be achieved therein, refer to beneficial effects in the corresponding method provided above, and details are not described herein again.

### BRIEF DESCRIPTION OF DRAWINGS

FIG. 1 is a schematic diagram of an architecture of a communication system according to an embodiment of this application;
FIG. 2 is a schematic diagram of a structure of a pair of wireless earphones 100 according to an embodiment of this application;
FIG. 3 is a schematic diagram of a structure of a mobile phone 200 according to an embodiment of this application;
FIG. 4 is a schematic diagram of a connection between a pair of wireless earphones 100 and a second electronic device;
FIG. 5A(1) and FIG. 5A(2) are interface diagrams of a volume value adjustment according to an embodiment of this application;
FIG. 5B(1), FIG. 5B(2), and FIG. 5B(3) are interface diagrams of another volume value adjustment according to an embodiment of this application;
FIG. 6 is a schematic diagram of a connection between a pair of wireless earphones 100 and a first electronic device;
FIG. 7 is a schematic diagram of a volume adjustment according to an embodiment of this application;
FIG. 8A and FIG. 8B are interface diagrams of a first electronic device according to an embodiment of this application;
FIG. 9A is a schematic diagram of another volume adjustment according to an embodiment of this application;
FIG. 9B is a schematic diagram of still another volume adjustment according to an embodiment of this application;
FIG. 10 is a flowchart of a volume adjustment method according to an embodiment of this application;
FIG. 11 is a schematic diagram of yet another volume adjustment according to an embodiment of this application;
FIG. 12A is a diagram of a usage scenario according to an embodiment of this application;
FIG. 12B is a diagram of another usage scenario according to an embodiment of this application;
FIG. 13 is a schematic diagram of still yet another volume adjustment according to an embodiment of this application; and
FIG. 14 is a schematic diagram of a chip system according to an embodiment of this application.

### DESCRIPTION OF EMBODIMENTS

In the following descriptions, the terms "first" and "second" are used merely for the purpose of description, and shall not be construed as indicating or implying relative importance or implicitly indicating a quantity of indicated technical features. Therefore, features defined with "first" and "second" may explicitly or implicitly include one or more of the features. In the description of an embodiment herein, unless otherwise specified, "a plurality of" means two or more.

Implementations of embodiments are described in detail below with reference to the drawings.

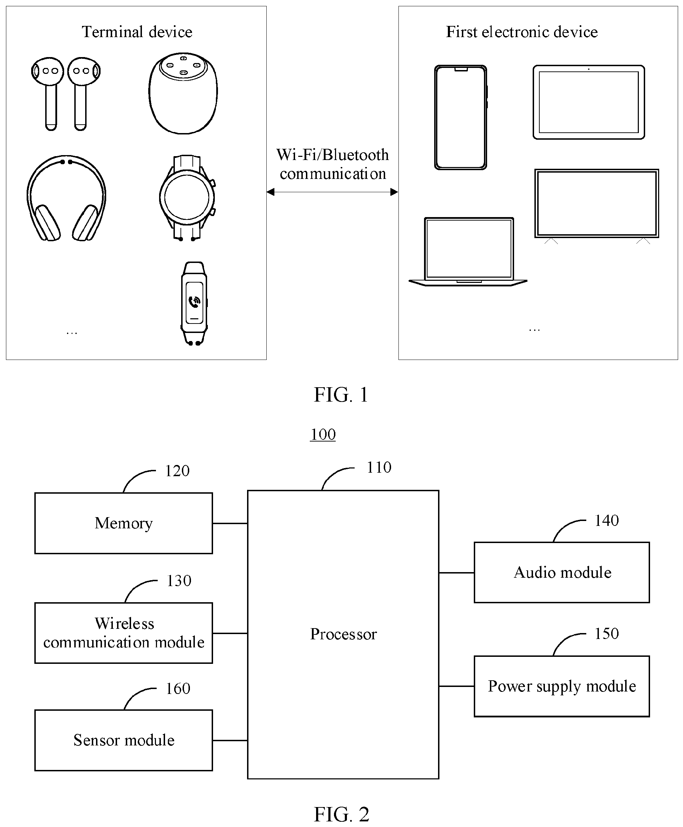

FIG. 1 is a schematic diagram of an architecture of a communication system according to an embodiment of this application. As shown in FIG. 1, the communication system may include a terminal device and a first electronic device.

The terminal device may communicate with the first electronic device through a wireless local area network (wireless local area networks, WLAN) (for example, a wireless fidelity (wireless fidelity, Wi-Fi) network), Bluetooth (including classic Bluetooth BR/EDR (basic rate/enhanced data rate) and Bluetooth low energy (Bluetooth low energy, BLE)), or the like.

For example, the terminal device in this embodiment of this application may be an electronic device having a function of playing back an audio, or an audio and a video, such as a wireless speaker, a pair of wireless earphones, a smart watch, and a smart bracelet. This is not limited in this embodiment of this application.

For example, the first electronic device in this embodiment of this application may be specifically a device such as a mobile phone, a tablet computer, a television, a notebook computer, an ultra-mobile personal computer (ultra-mobile personal computer, UMPC), a handheld computer, a netbook, or a personal digital assistant (personal digital assistant, PDA). This is not limited in this embodiment of this application.

In this embodiment of this application, a structure of the terminal device according to this embodiment of this application is described by using an example in which the terminal device shown in FIG. 1 is a pair of wireless earphones.

FIG. 2 is a schematic diagram of a structure of a pair of wireless earphones 100. The pair of wireless earphones 100 may include a processor 110, a memory 120, a wireless communication module 130, an audio module 140, a power supply module 150, a sensor module 160, and the like. The processor 110 may include one or more interfaces for the processor to connect to another component of the pair of wireless earphones 100. The one or more interfaces may include: an input/output (Input/Output, I/O) interface (also referred to as an I/O pin), an interrupt pin, a data bus interface, and the like. The data bus interface may include one or more of the following: a serial peripheral interface (serial peripheral interface, SPI), an inter-integrated circuit (inter-integrated circuit, I2C) interface, and the like. For example, in this embodiment of this application, the processor 110 may be connected to the sensor module 160 through the I/O pin, the interrupt pin, or the data bus interface.

The memory 120 may be configured to store program code, for example, program code for charging the pair of wireless earphones 100, program code for the pair of wireless earphones 100 performing wireless pairing connection to another electronic device (for example, a first electronic device), or program code for the pair of wireless earphones 100 performing wireless communication with the electronic device (for example, the first electronic device). The memory 120 may further store an identifier for uniquely identifying a Bluetooth device of the pair of wireless earphones. In addition, the memory 120 may further store connection data of an electronic device that had been successfully paired with the pair of wireless earphones previously. For example, the connection data may be an identifier of an electronic device that had been successfully paired with the pair of wireless earphones. Based on the connection data, the pair of wireless earphones 100 may be automatically paired with the electronic device without having to configure a connection to the electronic device, for example, performing validity verification. The identifier for the Bluetooth device may be a media access control (media access control, MAC) address. The memory 120 may further store configuration data of the electronic device that had been successfully paired with the pair of wireless earphones previously. For example, the configuration data may include an output volume value of the electronic device. For another example, the configuration data may further include information about a maximum playback volume, a minimum playback volume, a volume value, and the like of the electronic device.

The processor 110 may be configured to execute the foregoing application program code, and invoke related modules to implement functions of the pair of wireless earphones 100 in this embodiment of this application, for example, to implement a volume adjustment function, a charging function, a wireless communication function, an audio data playback function, an in-and-out box detection function, and the like of the pair of wireless earphones 100. The processor 110 may include one or more processing units. Different processing units may be independent components, or may be integrated into one or more processors 110. The processor 110 may be specifically an integrated control chip, or may be formed by a circuit including various active and/or passive components, and the circuit is configured to perform the functions of the processor 110 described in this embodiment of this application. The processor of the pair of wireless earphones 100 may be a microprocessor.

The sensor module 160 may include a distance sensor or an optical proximity sensor. The processor 110 may determine, data collected by the distance sensor or the optical proximity sensor, whether the pair of wireless earphones 100 are put on by a user. For example, the processor 110 may detect, based on the data collected by the distance sensor, whether there is an object near the pair of wireless earphones 100, to determine whether the pair of wireless earphones 100 are put on by the user. When it is determined that the pair of wireless earphones 100 are put on, the processor 110 may turn on a loudspeaker of the pair of wireless earphones 100. In some embodiments, the pair of wireless earphones 100 may further include a bone conduction sensor, to form a pair of bone conduction earphones. By using the bone conduction sensor, the processor 110 may acquire a vibration signal from a vibration bone of a vocal-cord part, and parse out a voice signal, to implement a voice function.

For another example, an outer surface of the pair of wireless earphones 100 may further include: a touch sensor, configured to detect a touch operation by a user; a fingerprint sensor, configured to detect a fingerprint of the user and identify an identity of the user; an ambient light sensor, configured to adaptively adjust some parameters (for example, volume) based on brightness of sensed ambient light; and some other sensors.

The wireless communication module 130 may be configured to support data exchange of wireless communication including Bluetooth, a global navigation satellite system (global navigation satellite system, GNSS), a wireless local area network, frequency modulation (frequency modulation, FM), a near field communication (near field communication, NFC) technology, an infrared (infrared, IR) technology, and the like between the pair of wireless earphones 100 and another electronic device or earphone box. In some embodiments, the wireless communication module 130 may be a Bluetooth chip. The pair of wireless earphones 100 may pair with and establish a wireless connection to a Bluetooth chip of another electronic device (for example, the first electronic device) through the Bluetooth chip, to implement wireless communication between the pair of wireless earphones 100 and another electronic device through the wireless connection.

In addition, the wireless communication module 130 may further include an antenna. The wireless communication module 130 receives an electromagnetic wave through the antenna, performs frequency modulation and filtering on an electromagnetic wave signal, and sends a processed signal to the processor 110. The wireless communication module 130 may further receive a to-be-sent signal from the processor 110, perform frequency modulation on and amplify the signal, and radiate the signal after the signal is converted into an electromagnetic wave by the antenna.

The audio module 140 may be configured to manage audio data, to enable the pair of wireless earphones 100 to input and output audio signals. For example, the audio module 140 may obtain an audio signal from the wireless communication module 130, or transmit an audio signal to the wireless communication module 130, to implement functions such as answering or making a phone call, playing music, enabling/disabling a voice assistant of an electronic device connected to the earphones through the pair of wireless earphones 100, and receiving/sending voice data of the user. The audio module 140 may include a loudspeaker (or referred to as a pair of earpieces, a telephone receiver, a loudspeaker) assembly for outputting an audio signal, a microphone (or referred to as a voice tube or a mike), a microphone sound-receiving circuit matched with the microphone, and the like. The loudspeaker may be configured to convert an audio-electrical signal into a sound signal and play the sound signal. The microphone may be configured to convert a sound signal into an audio-electrical signal.

The power supply module 150 may be configured to provide power supply to a system of the pair of wireless earphones 100, provide supply power to each module of the pair of wireless earphones 100, support the pair of wireless earphones 100 to receive a charging input, and the like. The power supply module 150 may include a power management unit (power management unit, PMU) and a battery. The power management unit may include a charging circuit, a voltage drop regulation circuit, a protection circuit, a power measurement circuit, and the like. The charging circuit may receive an external charging input. The voltage drop regulation circuit may perform voltage transformation on an electrical signal input by the charging circuit and then output the electrical signal to the battery, to complete charging of the battery, or may perform voltage transformation on an electrical signal input by the battery and then output the electrical signal to another module such as the audio module 140 or the wireless communication module 130. The protection circuit may be configured to prevent the battery from overcharge, over-discharge, short circuit, over-current, or the like. In some embodiments, the power supply module 150 may further include a wireless charging coil for charging the pair of wireless earphones 100 in a wireless manner. In addition, the power management unit may be further configured to monitor parameters such as a battery capacity, a batter cycle count, and a battery health state (leakage or impedance).

It may be understood that the structure illustrated in this embodiment of this application does not constitute a specific limitation on the pair of wireless earphones 100. The pair of wireless earphones 100 may include more or fewer components than those shown in FIG. 2, combine two or more components, or have a different component configuration. The components shown in FIG. 2 may be implemented by hardware that includes one or more signal processors or application-specific integrated circuits, software, or a combination of hardware and software.

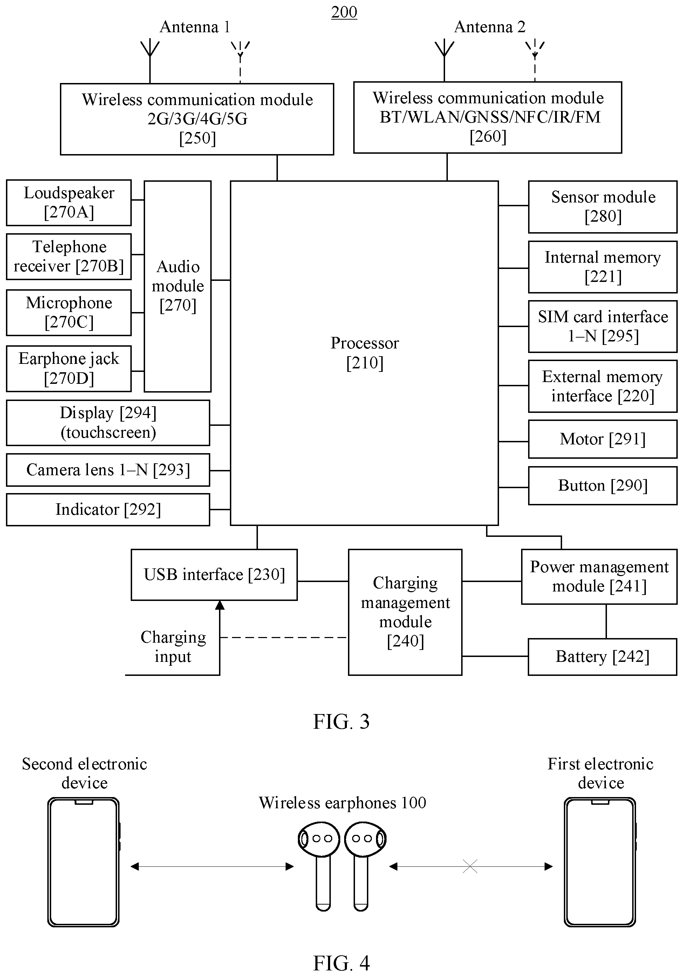

In this embodiment of this application, a structure of the first electronic device according to this embodiment of this application is described by using an example in which the first electronic device shown in FIG. 1 is a mobile phone 200. As shown in FIG. 3, the mobile phone 200 may include a processor 210, an external memory interface 220, an internal memory 221, a universal serial bus (universal serial bus, USB) interface 230, a charging management module 240, a power management module 241, a battery 242, an antenna 1, an antenna 2, a mobile communication module 250, a wireless communication module 260, an audio module 270, a loudspeaker 270A, a telephone receiver 270B, a microphone 270C, an earphone jack 270D, a sensor module 280, a button 290, a motor 291, an indicator 292, a camera lens 293, a display 294, a subscriber identification module (subscriber identification module, SIM) card interface 295, and the like.

The sensor module 280 may include sensors such as a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, and a bone conduction sensor.

It may be understood that a structure in this embodiment does not constitute a specific limitation on the first electronic device. In some other embodiments, the first electronic device may include more or fewer components than those shown in the figure, or some components may be combined, or some components may be split, or components are arranged in different manners. Components shown in the figure may be implemented by using hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video encoder and decoder, a digital signal processor (digital signal processor, DSP), a baseband processor, and/or a neural-network processing unit (neural-network processing unit, NPU). Different processing units may be independent components, or may be integrated into one or more processors.

The controller may be a neural center and command center of the mobile phone 200. The controller may generate an operation control signal based on instruction operation code and a timing signal, to control instruction fetching and instruction execution.

A memory may be further provided in the processor 210 to store instructions and data. In some embodiments, the memory of the processor 210 is a cache memory. The memory may store instructions or data that the processor 210 has just used or used cyclically. If the processor 210 needs to use the instructions or the data again, the processor 210 may directly invoke the instructions or the data from the memory. This avoids repeated access, and reduces a waiting time of the processor 210, and therefore improves system efficiency.

In some embodiments, the processor 210 may include one or more interfaces. The interface may include an I2C interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a USB interface, and/or the like.

It may be understood that an interface connection relationship between the modules illustrated in embodiments are merely illustrative descriptions, and does not constitute a limitation on a structure of the mobile phone 200. In some other embodiments, an interface connection manner different from that in the foregoing embodiment or a combination of a plurality of interface connection manners may be used for the mobile phone 200.

The charging management module 240 is configured to receive charging input from a charger. The charger may be a wireless charger, or may be a wired charger. The charging management module 240 may further supply power to the electronic device through a power management module 241 while charging the battery 242.

The power management module 241 is configured to connect the battery 242 and the charging management module 240 to the processor 210. The power management module 241 receives an input from the battery 242 and/or an input from the charging management module 240, to supply power to the processor 210, the internal memory 221, an external memory, the display 294, the camera lens 293, the wireless communication module 260, and the like. In some other embodiments, the power management module 241 and the charging management module 240 may alternatively be disposed in a same device.

A wireless communication function of the mobile phone 200 may be implemented by using the antenna 1, the antenna 2, the mobile communication module 250, the wireless communication module 260, the modem processor, the baseband processor, and the like. In some embodiments, in the mobile phone 200, the antenna 1 is coupled to the mobile communication module 250, and the antenna 2 is coupled to the wireless communication module 260, so that the mobile phone 200 can communicate with a network and another device by using a wireless communication technology.

The antenna 1 and the antenna 2 are configured to transmit or receive an electromagnetic wave signal. Each antenna in the mobile phone 200 may be configured to cover one or more communication frequency bands. Different antennas may further be multiplexed to improve utilization of the antennas. For example, the antenna 1 may be multiplexed into a diversity antenna of a wireless local area network. In some other embodiments, the antenna may be used together with a tuning switch.

The mobile communication module 250 may provide a wireless communication solution such as 2G/3G/4G/5G applied to the mobile phone 200. The mobile communication module 250 may include at least one filter, a switch, a power amplifier, a low noise amplifier (low noise amplifier, LNA), and the like. The mobile communication module 250 may receive an electromagnetic wave through the antenna 1, perform processing such as filtering and amplification on the received electromagnetic wave, and send a processed electromagnetic wave to the modem processor for demodulation.

The mobile communication module 250 may further amplify a signal modulated by the modem processor, and convert it into an electromagnetic wave by using the antenna 1 for transmission. In some embodiments, at least some of functional modules of the mobile communication module 250 may be provided in the processor 210. In some embodiments, at least some functional modules of the mobile communication module 250 and at least some modules of the processor 210 may be disposed in a same device.

The wireless communication module 260 may provide a wireless communication solution that is applied to the mobile phone 200 and that includes WLAN (such as Wi-Fi), Bluetooth, a global navigation satellite system (global navigation satellite system, GNSS), frequency modulation (frequency modulation, FM), near field communication (near field communication, NFC), an infrared (infrared, IR) technology, and the like. For example, in this embodiment of this application, the mobile phone 200 may establish a Bluetooth connection to the terminal device (for example, a pair of wireless earphones 100) by using the wireless communication module 260.

The wireless communication module 260 may be one or more devices integrated with at least one communication processing module. The wireless communication module 260 receives an electromagnetic wave through the antenna 2, performs frequency modulation and filtering on the electromagnetic wave signal, and sends a processed signal to the processor 210. The wireless communication module 260 may further receive a to-be-sent signal from the processor 210, perform frequency modulation on and amplify the signal, and radiate the signal after the signal is converted into an electromagnetic wave by the antenna 2.

The mobile phone 200 implements a display function by using a GPU, the display 294, an application processor, and the like. The GPU is a microprocessor for image processing and connects the display 294 and the application processor. The GPU is configured to perform mathematical and a geometric calculation for graphics rendering. The processor 210 may include one or more GPUs configured to execute program instructions to generate or change display information.

The display 294 is configured to display an image and a video. The display 294 includes a display panel.

The mobile phone 200 may implement a photographing function by using the ISP, the camera lens 293, the video encoder and decoder, the GPU, the display 294, the application processor, and the like. The ISP is configured to process data fed back by the camera lens 293. The camera lens 293 is configured to capture a still image or a video. In some embodiments, the mobile phone 200 may include one or N camera lenses 293, and N is a positive integer greater than 1.

The external memory interface 220 may be configured to be connected to an external memory card, for example, a Micro SD card, to expand a storage capability of the mobile phone 200. The external memory card communicates with the processor 210 through the external memory interface 220 to implement a data storage function, for example, store files such as music and a video into the external memory card.

The internal memory 221 may be configured to store computer executable program code. The executable program code includes instructions. The processor 210 runs the instructions stored in the internal memory 221, to perform various function applications and data processing of the mobile phone 200. For example, in this embodiment of this application, the processor 210 may execute instructions stored in the internal memory 221. The internal memory 221 may include a program storage area and a data storage area.

The program storage area may store an operating system, an application required by at least one function (such as a voice playback function and an image playback function), and the like. The data storage area may store data (for example, audio data and a phone book) and the like created in a process of using the mobile phone 200. In addition, the internal memory 221 may include a high-speed random access memory, or may further include a non-volatile memory such as at least one magnetic disk storage device, a flash memory device, and a universal flash storage (universal flash storage, UFS).

The mobile phone 200 may implement an audio function by using the audio module 270, the loudspeaker 270A, the telephone receiver 270B, the microphone 270C, the earphone jack 270D, the application processor, and the like, for example, music playing and sound recording.

The button 290 includes a power-on button, a volume button, and the like. The button 290 may be a mechanical button, or may be a touch button. The motor 291 may generate a vibration prompt. The motor 291 may be used for a vibration prompt for an incoming call, and may further be used for vibration feedback for a touch. The indicator 292 may be an indicator light, and may be configured to indicate a charging state and a power change, or may be configured to indicate a message, a missed incoming call, a notification, or the like. The SIM card interface 295 is configured to be connected to a SIM card. The SIM card may be inserted into the SIM card interface 295 or plugged from the SIM card interface 295, to come into contact with or be separated from the mobile phone 200. The mobile phone 200 may support 1 or N SIM card interfaces, where N is a positive integer greater than 1. The SIM card interface 295 may support a nano-SIM card, a micro-SIM card, a SIM card, and the like.

At present, after the terminal device establishes a connection to the first electronic device, if an output volume value of the first electronic device is extremely large or extremely small, an output volume of the terminal device does not conform to a use habit of the user. In an implementation, the terminal device may automatically adjust a playback volume within a specific range. However, an adjustment range in this manner is limited, and does not usually conform to the use habit of the user. As a result, the user needs to manually adjust the output volume value of the first electronic device. It may be learned that an operation of a volume adjustment manner in a conventional technology is complicated, affecting user experience.

In view of this, an embodiment of this application provides a volume adjustment method. The volume adjustment method may be applied to a terminal device (for example, a pair of wireless earphones 100). The terminal device may, after being connected to an electronic device (for example, a first electronic device), obtain a first volume value of another electronic device (for example, a second electronic device) that had been connected, and send an audio adjustment message to the second electronic device. The first volume value may be a volume value that conforms to a use habit of a user when the user uses the second electronic device. The audio adjustment message indicates the second electronic device to adjust a playback volume to a playback volume corresponding to the first volume value.

In this way, because the terminal device automatically adjusts the playback volume, the user does not need to manually adjust the playback volume, and a requirement of the user for comfort can be met. This achieves effect of reducing complexity of an operation and improving user experience.

The following describes a process in which the terminal device automatically adjusts the playback volume by using an example in which the terminal device is a pair of wireless earphones 100.

For example, as shown in FIG. 4, before the pair of wireless earphones 100 establish a communication connection to a first electronic device, the pair of wireless earphones 100 may first establish a communication connection to a second electronic device. The pair of wireless earphones 100 may determine and store a conventional volume value of the second electronic device. A conventional volume value of an electronic device may mean a volume value that conforms to a use habit of a user when the user uses the electronic device to play back audio data. For example, the conventional volume value of the second electronic device is a volume value that conforms to the use habit of the user when the user uses the second electronic device to play back the audio data. A conventional volume value of the first electronic device is a volume value that conforms to the use habit of the user when the user uses the first electronic device to play back the audio data.

It should be noted that the volume value in this embodiment of this application is not a decibel, and does not indicate an absolute volume level. The volume value in this embodiment of this application is a specific numerical value. The numerical value indicates a proportional relationship between a playback volume corresponding to the volume value and a maximum playback volume of the electronic device (for example, the first electronic device or the second electronic device). As the volume value is larger, the playback volume corresponding to the volume value is larger. As the volume value is smaller, the playback volume corresponding to the volume value is smaller. For example, the volume value of the electronic device may be in a range of 1 to 100, a playback volume corresponding to a volume value 100 is the maximum playback volume, and a playback volume corresponding to a volume value 25 is 25% of the maximum playback volume.

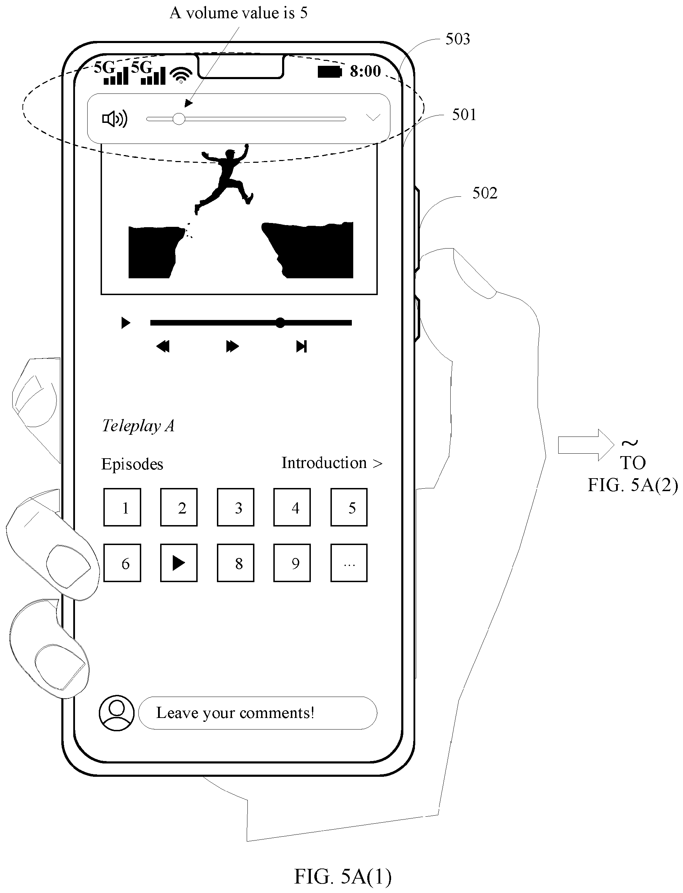

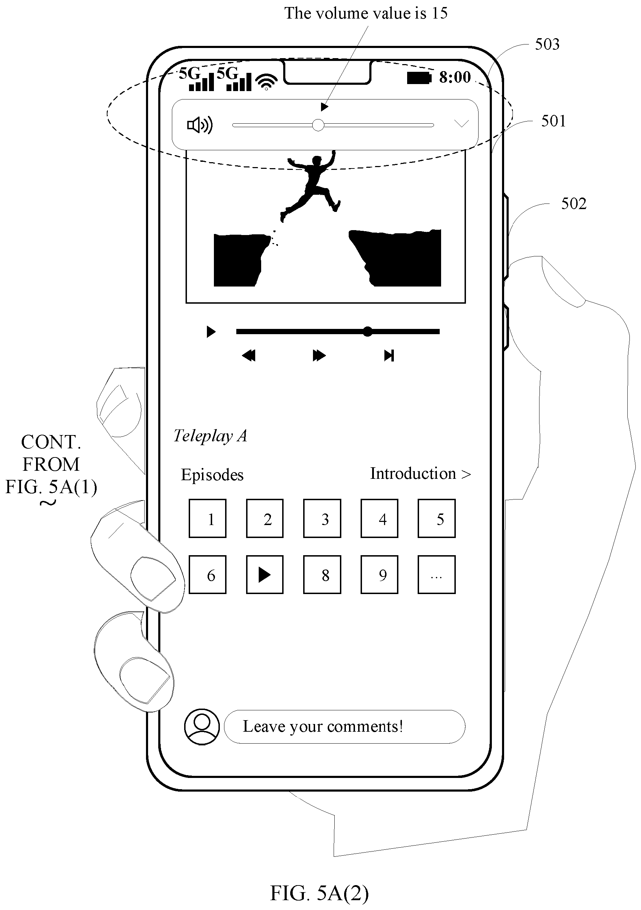

It may be understood that the second electronic device may transmit the audio data to the pair of wireless earphones 100, and the pair of wireless earphones 100 may decode the audio data to obtain a sampled audio signal and play back the sampled audio signal through a loudspeaker. It should be noted that the audio data may come from an audio file (for example, an MP3 file) or a video file. In the process, if an output volume value conforms to the use habit of the user, the user does not perform an operation of adjusting the volume. If the output volume value (a volume value output to the pair of wireless earphones 100) of the second electronic device does not conform to the use habit of the user (the volume value is extremely large or extremely small), the user may adjust the volume value. For example, the user may adjust the volume by using a volume adjustment button of the second electronic device. As shown in FIG. 5A(1) and FIG. 5A(2), the second electronic device may display a video application interface 501. The second electronic device may receive an operation of the user on the volume adjustment button 502. In response to the operation, the second electronic device may display a volume slider 503, and the volume slider 503 changes to a volume value 15 indicated in FIG. 5A(2) from a volume value 5 indicated in FIG. 5A(1).

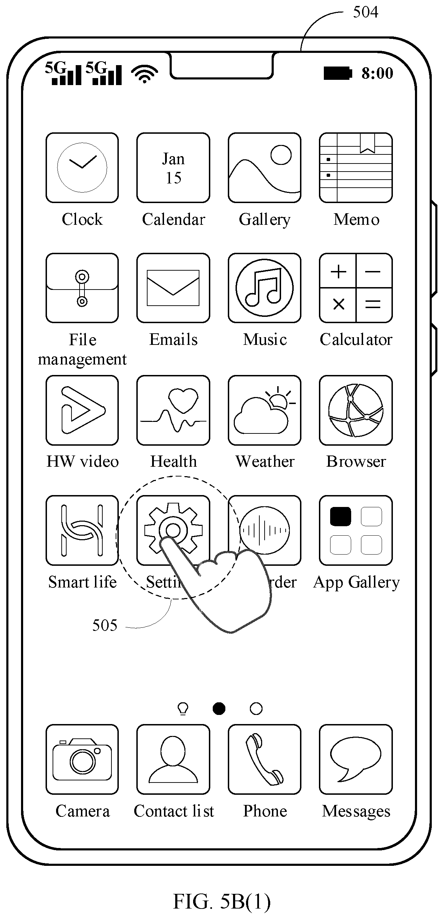

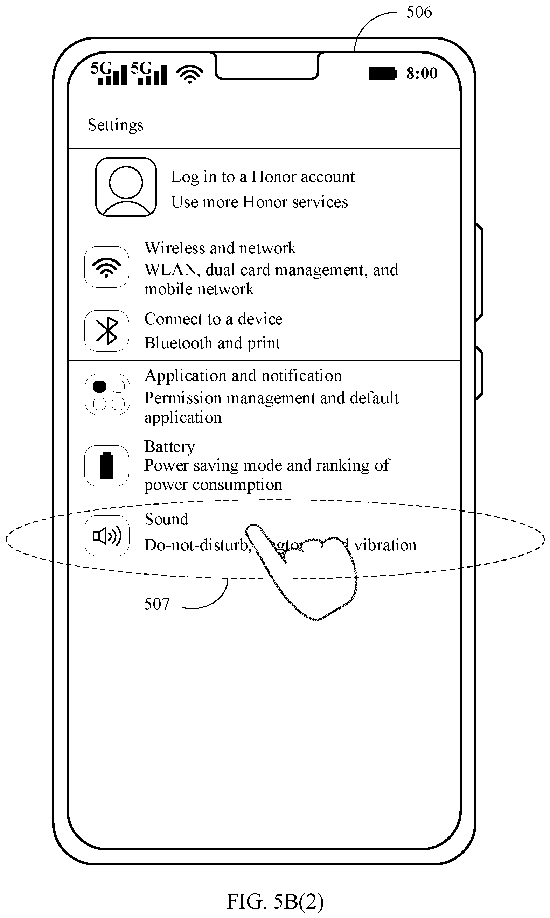

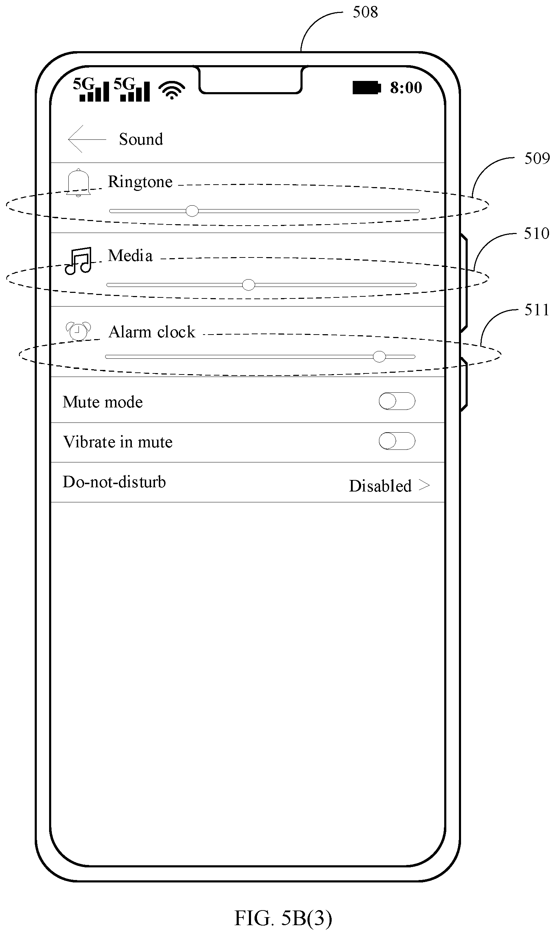

For another example, the user may adjust the volume at a volume adjustment interface of the second electronic device. As shown in FIG. 5B(1), the second electronic device may display a main interface 504, and the main interface 504 may include a settings icon 505. The second electronic device may receive an operation of the user on the settings icon 505. In response to the operation, as shown in FIG. 5B(2), the second electronic device may display a setting interface 506. The setting interface 506 may include a "wireless and network" entry, a "device connection" entry, an "application and notification" entry, a "battery" entry, a "sound" entry 507, and the like. The second electronic device may receive an operation of the user on the "sound" entry 507. In response to the operation, as shown in FIG. 5B(3), the second electronic device may display a volume adjustment interface 508. The volume adjustment interface 508 may display a volume slider 509 corresponding to a ringtone, a volume slider 510 corresponding to media, a volume slider 511 corresponding to an alarm clock, and the like. The second electronic device may receive an operation of the user on any of the foregoing volume sliders (the volume slider 509, the volume slider 510, and the volume slider 511), to adjust a volume of a corresponding item.

In an optional implementation, if the pair of wireless earphones 100 detect that an output volume value of the second electronic device is not adjusted within a first preset time, it may be determined that the output volume value conforms to the use habit of the user, and the output volume value is set to the conventional volume value of the second electronic device. For example, the first preset time may be 5 minutes, and if the pair of wireless earphones 100 detect that the output volume value of the second electronic device is maintained at a volume value 57 within the 5 minutes, the volume value 57 may be set to the conventional volume value of the second electronic device.

It should be noted that the conventional volume value of the second electronic device is updatable. In an optional implementation, the pair of wireless earphones 100 may determine, as the conventional volume value of the second electronic device, an output volume value that meets a time condition (that is, the output volume value is not adjusted within the first preset time) recently. For example, if the pair of wireless earphones 100 recently detect that the output volume value of the second electronic device is a volume value 23 and maintained for 5 minutes, the pair of wireless earphones 100 may set the volume value 23 to the conventional volume value of the second electronic device.

In addition, after the conventional volume value of the second electronic device is determined, the pair of wireless earphones 100 may further establish a correspondence between the conventional volume value and the second electronic device and store the correspondence. For example, the pair of wireless earphones 100 may obtain information about an identifier, a device type, a device model, and the like of the second electronic device, and may establish a correspondence between the information about an identifier, a device type, a device model, and the like of the second electronic device and the conventional volume value. The identifier of the second electronic device may include information about a MAC address, an international mobile equipment identity (international mobile equipment identity, IMEI), and a product serial number (serial number, SN). The device model may include, for example, information for identifying a specific model of a device such as Honor V40, Honor V30 pro, Honor V30, and the like. In an optional implementation, the second electronic device may utilize a specific code to represent the device model, for example, OXF-AN10 may represent Honor V30 pro, and YOK-AN10 may represent Honor V40. The device type may indicate that the second electronic device is any one of the following devices: a mobile phone, a tablet computer, a computer, and the like.

For example, the correspondence stored by the pair of wireless earphones 100 may be shown in Table 1.

**Table 1**

| MAC address | Device model | Conventional volume value |
|---|---|---|
| 5C-FF-35-8B-95-B5 | Honor V40 | 28 |
| 8C-7B-9D-43-50-89 | Honor tablet 7 | 61 |
| 44-7A-CF-7B-67-25 | Honor X30 | 39 |
| ... | ... | ... |

As shown in Table 1, a corresponding conventional volume value of a device of which the MAC address is "5C-FF-35-8B-95-B5" is 28; a corresponding conventional volume value of a device of which the MAC address is "8C-7B-9D-43-50-89" is 61; and a corresponding conventional volume value of a device of which the MAC address is "44-7A-CF-7B-67-25" is 39.

In an optional implementation, after being connected to the second electronic device, the pair of wireless earphones 100 may add the second electronic device to a list of devices. The list of devices may include information about identifiers (MAC addresses), device names, device models, connection time points, and the like of a plurality of electronic devices that have been connected to the pair of wireless earphones 100. The connection time point indicates a time point at which a communication connection is established between the electronic device and the pair of wireless earphones 100. For example, a list of devices stored by the pair of wireless earphones 100 may be shown in Table 2.

**Table 2**

| Device name | MAC address | Device model | Connection time point |
|---|---|---|---|
| Device A | 5C-FF-35-8B-95-B5 | Honor V40 | 2021/4.22/19:00 |
| Device B | 8C-7B-9D-43-50-89 | Honor tablet 7 | 2021/4.24/8:39 |
| Device C | 44-7A-CF-7B-67-25 | Honor X30 | 2021/4.26/16:50 |
| ... | ... | ... | ... |

As shown in Table 2, after being connected to the second electronic device (the device C), the pair of wireless earphones 100 may add a device name (device C), an identifier (44-7A-CF-7B-67-25), a device model (Honor X30), and a connection time point (2021/4.26/16:50) of the second electronic device to the list of devices. In addition, it may be learned from Table 2 that, before the pair of wireless earphones 100 are connected to the second electronic device, the pair of wireless earphones 100 have also been connected to the device A and the device B.

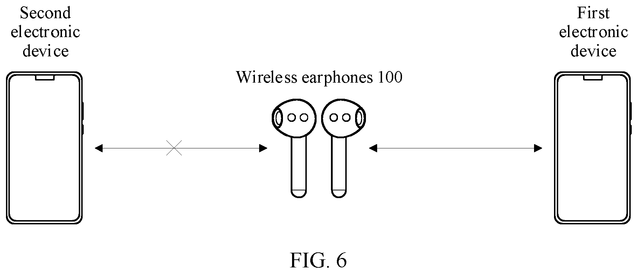

As shown in FIG. 6, after being disconnected from the second electronic device, the pair of wireless earphones 100 may establish a communication connection to the first electronic device. It should be noted that a manner in which the pair of wireless earphones 100 are disconnected from the second electronic device may include the following: A distance between the pair of wireless earphones 100 and the second electronic device is greater than a communicable distance specified in a protocol, the second electronic device disables a Bluetooth function, the pair of wireless earphones 100 are placed into an earphone box of the pair of wireless earphones 100, and the like. In addition, after being disconnected from the second electronic device, the pair of wireless earphones 100 may not immediately necessarily establish a communication connection to the first electronic device. However, there may be a specific time interval. For example, after being disconnected from the second electronic device for one hour, the pair of wireless earphones 100 may establish a communication connection to the first electronic device.

For example, in response to detecting that the pair of wireless earphones 100 establish a communication connection to the first electronic device, the pair of wireless earphones 100 may obtain the first volume value and adjust a decibel of a playback volume of the pair of wireless earphones 100 based on the first volume value. The first volume value is the conventional volume value of the second electronic device. Specifically, the pair of wireless earphones 100 may select, from the list of devices, an electronic device as the second electronic device, and obtain the conventional volume value of the second electronic device.

In an optional implementation, the pair of wireless earphones 100 may determine an electronic device that had been connected recently as the second electronic device before the pair of wireless earphones 100 establish a communication connection to the first electronic device. For example, as shown in Table 2, before being connected to the first electronic device, the pair of wireless earphones 100 have separately established a communication connection to the device A, the device B, and the device C in sequence. In this way, the pair of wireless earphones 100 may determine the device C as the second electronic device. It should be noted that, in this case, a device model of the first electronic device is not necessarily the same as a device model of the second electronic device.

In another optional implementation, the pair of wireless earphones 100 may query, in the list of devices, whether there is an electronic device of which a device model is the same as the device model of the first electronic device. If there is the electronic device of which a device model is the same as the device model of the first electronic device in the list of devices, the pair of wireless earphones 100 may determine the electronic device of which a device model is the same as the device model of the first electronic device as the second electronic device.

For example, still as shown in Table 2, the device model of the first electronic device is "Honor V40". Before being connected to the first electronic device, the pair of wireless earphones 100 had separately established a communication connection to the device A, the device B, and the device C in sequence. If a device model of the device A is "Honor V40", a device model of the device B is "Honor tablet 7", and a device model of device C is "Honor X30", the pair of wireless earphones 100 may determine the device A as the second electronic device.

In addition, if there is no electronic device of which a device model is the same as the device model of the first electronic device in the list of device, the pair of wireless earphones 100 may determine an electronic device that had been connected recently as the second electronic device before the pair of wireless earphones 100 establish a communication connection to the first electronic device.

After determining the second electronic device, the pair of wireless earphones 100 may obtain the identifier of the second electronic device, and query the conventional volume value (that is, obtain the first volume value) of the second electronic device based on the identifier. For example, the correspondence stored by the pair of wireless earphones 100 may be shown in Table 1. If a MAC address of the second electronic device is "44-7A-CF-7B-67-25", the pair of wireless earphones 100 may query, based on Table 1, that the conventional volume value of the second electronic device is "39".

For example, after obtaining the first volume value, the pair of wireless earphones 100 may adjust the decibel of the playback volume based on the first volume value. Considering that physical parameters (for example, output power, impedance, and the like) of electronic devices with different models and types are different, a playback volume corresponding to a unit volume value may be different. In this way, although output volume values of two electronic devices of which models or types are different are the same, the playback volumes of the pair of wireless earphones 100 may be different.

For each conventional volume value, a conventional volume value of the user is actually a playback volume corresponding to the conventional volume value. Therefore, when the pair of wireless earphones 100 adjust the playback volume based on the first volume value, it is necessary to consider whether the device model of the first electronic device is the same as the device model of the second electronic device.

Therefore, with reference to the manner in which the second electronic device is determined, there are a plurality of scenarios in which the pair of wireless earphones 100 adjust the playback volume based on the first volume value.

Scenario 1: Before the pair of wireless earphones 100 establish a communication connection to the first electronic device, the second electronic device is an electronic device that had been connected recently.

Because the pair of wireless earphones 100 directly determine the electronic device that had been connected recently as the second electronic device, the device model of the first electronic device is not necessarily the same as the device model of the second electronic device. Therefore, in response to detecting that the pair of wireless earphones 100 establish a communication connection to the first electronic device, the pair of wireless earphones 100 may further obtain first model information and second model information. The first model information carries the device model of the first electronic device, and the second model information carries the device model of the second electronic device. In this way, the pair of wireless earphones 100 may determine, based on the first model information and the second model information, whether the device model of the first electronic device is the same as the device model of the second electronic device, and generate a determining result. The pair of wireless earphones 100 may adjust the playback volume in a different manner based on the determining result.

For example, if the first model information is "Honor V40" and the second model information is "Honor X30", the determining result indicates that the device model of the first electronic device is different from the device model of the second electronic device. For another example, if the first model information is "Honor tablet 7" and the second model information is "Honor tablet 7", the determining result indicates that the device model of the first electronic device is the same as the device model of the second electronic device.

In a first case, if the determining result indicates that the device model of the first electronic device is the same as the device model of the second electronic device, the pair of wireless earphones 100 may send a volume adjustment message to the first electronic device. The volume adjustment message carries the first volume value and an identifier of the pair of wireless earphones 100. In response to the volume adjustment message, the first electronic device may adjust the output volume value (the volume value output to the pair of wireless earphones 100) to the first volume value, to enable the first electronic device to adjust the playback volume to the playback volume corresponding to the first volume value.

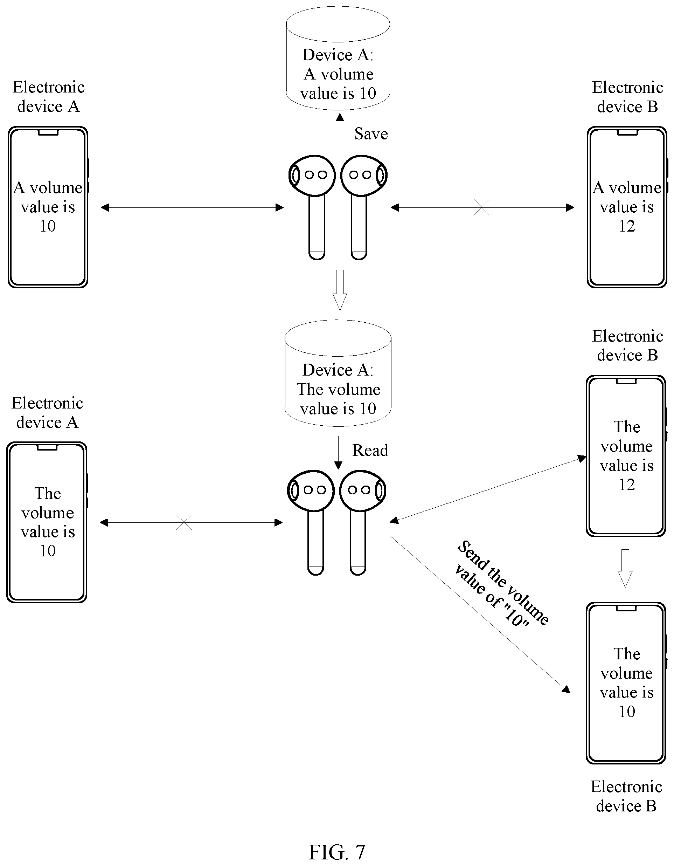

For example, as shown in FIG. 7, the device model of the first electronic device (an electronic device B) is the same as the device model of the second electronic device (an electronic device A). When the pair of wireless earphones 100 are connected to the electronic device A and disconnected from the electronic device B, the pair of wireless earphones 100 may store a conventional volume value (the volume value is 10) of the electronic device A. After the pair of wireless earphones 100 are disconnected from the electronic device A and establishes a connection to the electronic device B (a volume value of the electronic device B is 12), the pair of wireless earphones 100 may obtain the conventional volume value and transmit a volume adjustment message to the electronic device B. The volume adjustment message carries a volume value 10. In response to the volume adjustment message, the electronic device B adjusts the volume value to 10. In this way, the playback volume of the pair of wireless earphones 100 is a decibel corresponding to the volume value 10.

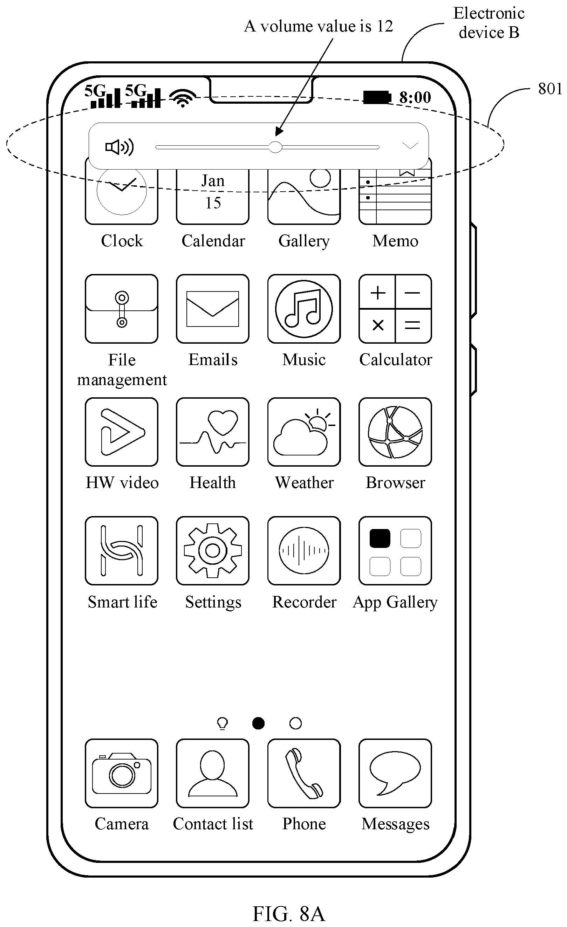

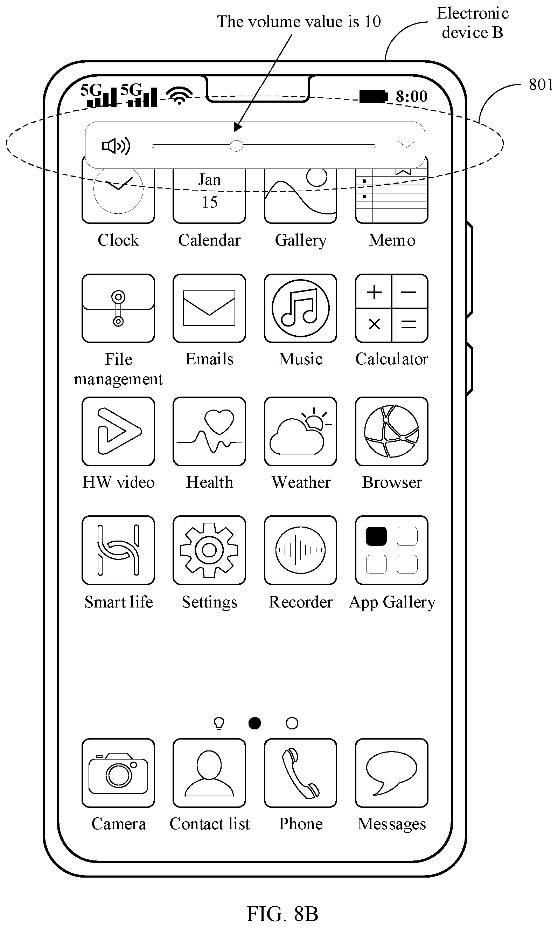

It should be noted that, as shown in FIG. 8A and FIG. 8B, in a process in which the output volume is adjusted based on the volume adjustment message, the electronic device B may display a volume slider 801. As shown in FIG. 8A, before the volume is adjusted, the volume value of the electronic device B is 12. As shown in FIG. 8B, after the volume is adjusted, the volume value of the electronic device B is 10.

It may be learned that, because the device model of the first electronic device is the same as the device model of the second electronic device, a first unit volume is the same as a second unit volume. The first unit volume is a playback volume corresponding to a unit volume value of the second electronic device, and the second unit volume is a playback volume corresponding to a unit volume value of the first electronic device. Therefore, when the output volume value of the second electronic device is the same as the output volume value of the first electronic device, the playback volumes of the pair of wireless earphones 100 are the same. Therefore, in a manner in which the output volume value of the first electronic device is adjusted to the first volume value, a playback volume of the pair of wireless earphones 100 after being connected to the first electronic device may be enabled to be the playback volume corresponding to the first volume value. It may be understood that after the first electronic device is paired and connected to the pair of wireless earphones 100, the pair of wireless earphones 100 may obtain and store the second unit volume. After the second electronic device is paired and connected to the pair of wireless earphones 100, the pair of wireless earphones 100 may obtain and store the first unit volume.

In actual application, a case in which the output volume value of the first electronic device is the same as the first volume value may exist. When the output volume value of the first electronic device is the same as the first volume value, if the output volume is continuously adjusted, a resource in the pair of wireless earphones 100 may be wasted.

Therefore, in an optional implementation, the pair of wireless earphones 100 may obtain a third volume value, and compare whether the first volume value is the same as the third volume value. If the first volume value is different from the third volume value, the pair of wireless earphones 100 may send a volume adjustment message to the first electronic device, to adjust the output volume. If the first volume value is the same as the third volume value, the pair of wireless earphones 100 do not need to adjust the output volume, and may not send the volume adjustment message to the first electronic device. In this way, the pair of wireless earphones 100 send the volume adjustment message only when the first volume value is different from the third volume value, to avoid waste of the resource.

In another optional implementation, in response to the volume adjustment message, the first electronic device may obtain the third volume value. The third volume value is a current volume value (that is, a volume value before volume adjustment is performed) of the first electronic device. The first electronic device may compare the first volume value with the third volume value. If the first volume value is the same as the third volume value, the first electronic device may not adjust the output volume value. If the first volume value is different from the third volume value, the first electronic device adjusts the output volume value to the first volume value.

In a second case, the determining result indicates that the device model of the first electronic device is different from the device model of the second electronic device. In the second case, the pair of wireless earphones 100 may alternatively adjust the playback volume in the following manners.

Manner 1: If the determining result indicates that the device model of the first electronic device is different from the device model of the second electronic device, the pair of wireless earphones 100 may determine an amplitude and a frequency that are corresponding to the first volume value, and adjust the playback volume based on the amplitude and the frequency. For example, the pair of earphones may detect the amplitude and the frequency that are corresponding to the first volume value by using a hardware apparatus (for example, a sound detection apparatus, and a sensor) related to the pair of earphones. The frequency may determine a level of a sound tone. As the frequency is higher, the sound tone is higher. The amplitude may determine a size of a volume. As the amplitude is larger, the volume is higher.

To be specific, the pair of wireless earphones 100 may send the volume adjustment message to the first electronic device. The volume adjustment message may carry the amplitude, the frequency, and the identifier of the pair of wireless earphones 100. In response to the volume adjustment message, the first electronic device may adjust, to a second volume value, the volume value output to the pair of wireless earphones 100. The second volume value is measured by using a sound detection apparatus, such as a sensor, of the first electronic device, and converted into values of a corresponding amplitude and frequency by using a converter. The values of the amplitude and the frequency are processed by an audio module of the first electronic device, to play a sound that satisfies the amplitude and the frequency. In this way, a playback volume corresponding to the second volume value may be the same as the playback volume corresponding to the first volume value.

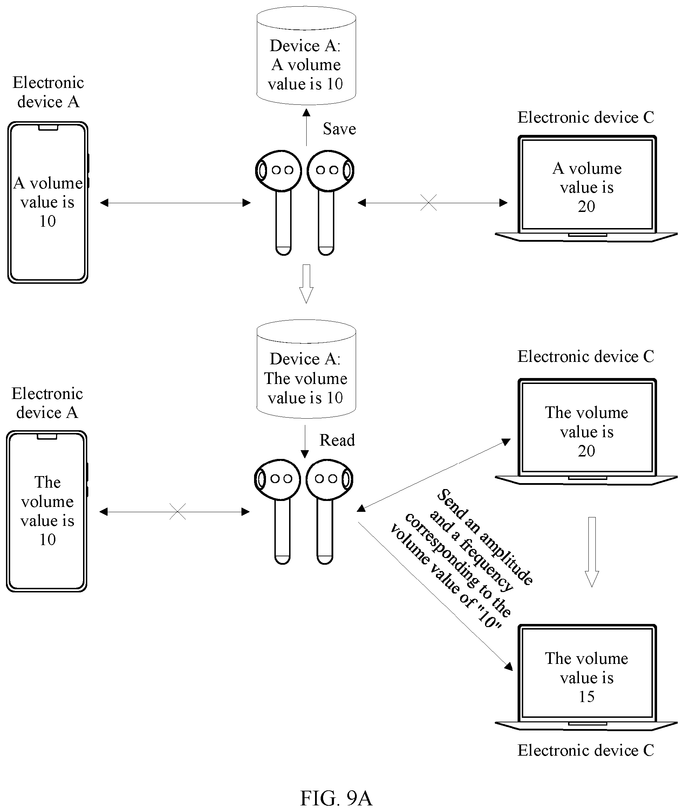

For example, as shown in FIG. 9A, the device model of the first electronic device (an electronic device C) is different from the device model of the second electronic device (an electronic device A). The pair of wireless earphones 100 may be first connected to the electronic device A and disconnected from the electronic device C, and the pair of wireless earphones 100 may store a conventional volume value (the volume value is 10) of the electronic device A. Afterwards, the pair of wireless earphones 100 may be disconnected from the electronic device A and establish a connection to the electronic device C (a volume value of the electronic device C is 20). In addition, the pair of wireless earphones 100 may obtain a conventional volume value of the electronic device A and determine an amplitude and a frequency that are corresponding to the conventional volume value (the volume value is 10). The pair of wireless earphones 100 may transmit the amplitude and the frequency that are corresponding to the volume value 10 to the electronic device C, to enable the electronic device C to adjust the volume value to 15.

Manner 2: If the determining result indicates that the device model of the first electronic device is different from the device model of the second electronic device, the pair of wireless earphones 100 may determine the first playback volume based on the first volume value and the first unit volume, and adjust the output volume based on the first playback volume. Specifically, the first playback volume is a product of the first volume value and the first unit volume. For example, if the first volume value is 15, and the first unit volume is 2 dB, the first playback volume is 15 x 2 = 30 dB. Further, the pair of wireless earphones 100 may send the playback volume of 30 dB to the first electronic device. The first electronic device determines, based on the first playback volume, a second volume value corresponding to that playback volume.

To be specific, the pair of wireless earphones 100 may further send the volume adjustment message to the first electronic device. The volume adjustment message may carry the first playback volume and the identifier of the pair of wireless earphones 100. In response to the volume adjustment message, the first electronic device may adjust, to the second volume value, the volume output to the pair of wireless earphones 100. The second volume value is a volume value determined by the first electronic device based on the first playback volume and the second unit volume. For example, if the first playback volume is 30 dB and the second unit volume is 5 dB, the second volume value is 6. In this way, a playback volume corresponding to the second volume value may be the same as the playback volume corresponding to the first volume value.

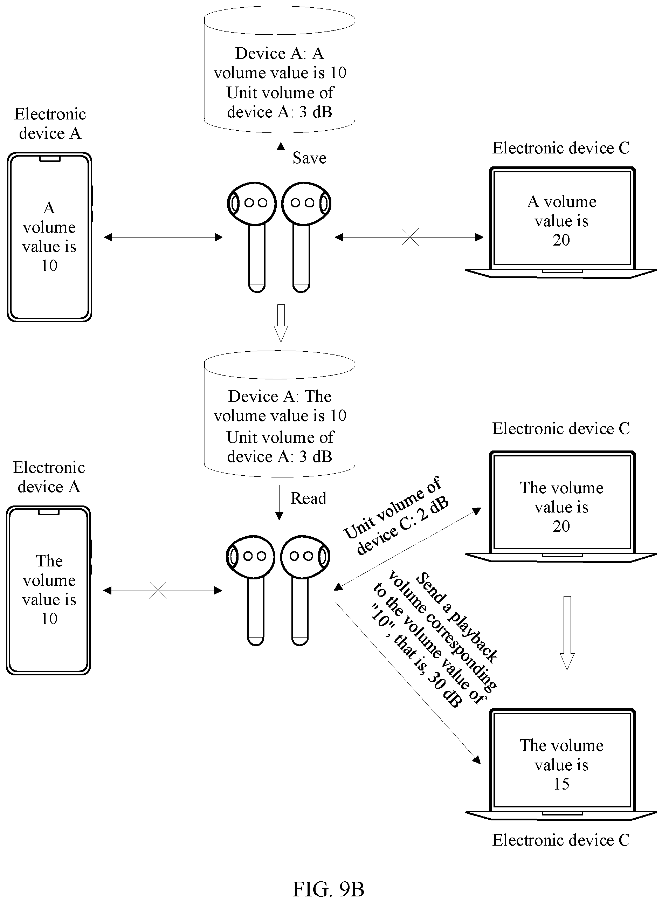

For example, as shown in FIG. 9B, the device model of the first electronic device (an electronic device C) is different from the device model of the second electronic device (an electronic device A). The pair of wireless earphones 100 may be first connected to the electronic device A and disconnected from the electronic device C, the pair of wireless earphones 100 may store the conventional volume value (the volume value is 10) of the electronic device A, a unit volume (3 dB) of the electronic device A, and a unit volume (2 dB) of the electronic device C. Afterwards, the pair of wireless earphones 100 may be disconnected from the electronic device A and establish a connection to the electronic device C (a volume value of the electronic device C is 20). In addition, the pair of wireless earphones 100 may obtain a conventional volume value of the electronic device A, and determine a playback volume (for example, 10 x 3 = 30 dB) corresponding to the conventional volume value (the volume value is 10). The pair of wireless earphones 100 may transmit the playback volume to the electronic device C, to enable the electronic device C to adjust the volume value to 15.

Similarly, considering that when the output volume of the first electronic device is the same as the playback volume corresponding to the first volume value, if the output volume is continuously adjusted, a resource in the pair of wireless earphones 100 may be wasted. Therefore, in an optional implementation, the pair of wireless earphones 100 may obtain the third volume value, and determine an amplitude and a frequency that are corresponding to the third volume value. The pair of wireless earphones 100 may further compare whether the amplitude and the frequency that are corresponding to the third volume value are the same as the amplitude and the frequency that are corresponding to the first volume value.

If the amplitude corresponding to the first volume value is different from the amplitude corresponding to the third volume value, and the frequency corresponding to the first volume value is different from the frequency corresponding to the third volume value, the pair of wireless earphones 100 may send the volume adjustment message to the first electronic device, to adjust the output volume.

If the amplitude corresponding to the first volume value is the same as the amplitude corresponding to the third volume value, and the frequency corresponding to the first volume value is different from the frequency corresponding to the third volume value, the pair of wireless earphones 100 may send the volume adjustment message to the first electronic device.

If the amplitude corresponding to the first volume value is different from the amplitude corresponding to the third volume value, and the frequency corresponding to the first volume value is the same as the frequency corresponding to the third volume value, the pair of wireless earphones 100 may send the volume adjustment message to the first electronic device.

If the amplitude corresponding to the first volume value is same as the amplitude corresponding to the third volume value, and the frequency corresponding to the first volume value is the same as the frequency corresponding to the third volume value, the pair of wireless earphones 100 do not need to adjust the output volume, and may not send the volume adjustment message to the first electronic device. In this way, the pair of wireless earphones 100 send the volume adjustment message only when the playback volume corresponding to the first volume value is different from the playback volume corresponding to the third volume value, to avoid the waste of the resource.

In another optional implementation, when the first playback volume (the playback volume corresponding to the first volume value) is different from the playback volume corresponding to the third volume value, the pair of wireless earphones 100 may send the volume adjustment message to the first electronic device.

It may be learned that the device model of the first electronic device is different from the device model of the second electronic device, and the first unit volume is different from the second unit volume. Therefore, when the first electronic device and the second electronic device output a same volume value, playback volumes are different. Therefore, when the output volume is adjusted based on a parameter that may accurately represent the playback volume, such as the amplitude, the frequency, or the playback volume, the output volume may achieve a playback volume after the pair of wireless earphones 100 are connected to the first electronic device, and is still the same as the playback volume when the pair of wireless earphones 100 are connected to the second electronic device, to meet the use habit of the user.

In addition, in Scenario 1, the electronic device that had been connected recently is directly determined as the second electronic device, and the output volume of the pair of wireless earphones 100 is adjusted based on the conventional volume of the electronic device. The pair of wireless earphones 100 do not need to perform more selections and screenings. This simplifies the process of adjusting the output volume of the pair of wireless earphones 100, and reduces power consumption of the pair of wireless earphones 100 to a specific extent.

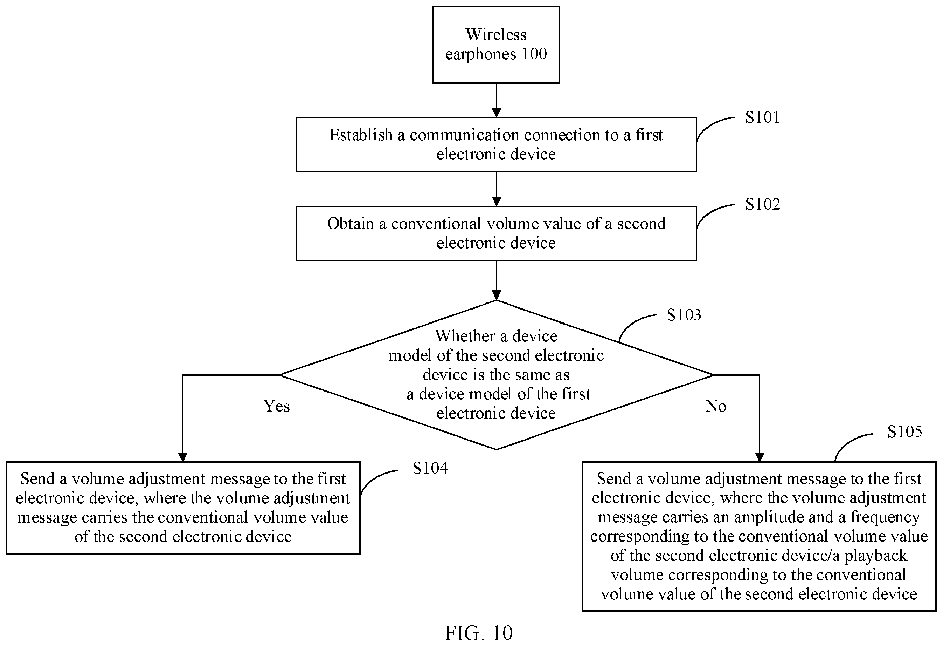

It may be learned from the foregoing description that, after the pair of wireless earphones 100 establish a connection to the first electronic device, the device model of the first electronic device may be the same as the device model of the second electronic device. Alternatively, the device model of the first electronic device may be different from the device model of the second electronic device. The following describes the volume adjustment method provided in this embodiment of this application with reference to a flowchart. Refer to FIG. 10. The volume adjustment method provided in this embodiment of this application includes:

S101: The pair of wireless earphones 100 establish a communication connection to the first electronic device.

It may be understood that before the pair of wireless earphones 100 establish a communication connection to the first electronic device, the pair of wireless earphones 100 have established a communication connection to a plurality of electronic devices. When being connected to the electronic device, the pair of wireless earphones 100 may store the conventional volume value of the electronic device. In addition, before the pair of wireless earphones 100 establish a communication connection to the first electronic device, the pair of wireless earphones 100 need to be disconnected from another electronic device.

S102: The pair of wireless earphones 100 obtain the conventional volume value of the second electronic device.

In an optional implementation, the pair of wireless earphones 100 may directly determine the electronic device that had been connected recently as the second electronic device before the pair of wireless earphones 100 establish a communication connection to the first electronic device, and obtains the conventional volume value corresponding to the identifier of the second electronic device.

In another optional implementation, the pair of wireless earphones 100 may query, in the list of devices, whether there is the electronic device of which a device model is the same as the device model of the first electronic device. If there is the electronic device of which a device model is the same as the device model of the first electronic device in the list of devices, the pair of wireless earphones 100 may determine the electronic device of which a device model is the same as the device model of the first electronic device as the second electronic device. If there is no electronic device of which a device model is the same as the device model of the first electronic device in the list of device, the pair of wireless earphones 100 may determine the electronic device that had been connected recently as the second electronic device before the pair of wireless earphones 100 establish a communication connection to the first electronic device. After determining the second electronic device, the pair of wireless earphones 100 obtain a corresponding conventional volume value based on the identifier of the second electronic device.

S103: The pair of wireless earphones 100 determine whether the device model of the second electronic device is the same as the device model of the first electronic device.

If the device model of the second electronic device is the same as the device model of the first electronic device, S104 is performed. If the device model of the second electronic device is different from the device model of the first electronic device, S105 is performed.

S104: The pair of wireless earphones 100 send the volume adjustment message to the first electronic device, and the volume adjustment message carries the conventional volume value of the second electronic device.

S105: The pair of wireless earphones 100 send the volume adjustment message to the first electronic device, and the volume adjustment message carries the amplitude and the frequency that are corresponding to the conventional volume value of the second electronic device/the playback volume corresponding to the conventional volume value of the second electronic device.

In this way, the pair of wireless earphones 100 may adjust the playback volume to the playback volume corresponding to the conventional volume value.

Scenario 2: The pair of wireless earphones 100 query, in the list of devices, an electronic device of which a device model is the same as the device model of the first electronic device, and determines the electronic device of which a device model is the same as the device model of the first electronic device as the second electronic device.

It may be learned that, in Scenario 2, the second electronic device is the electronic device of which a device model is the same as the device model of the first electronic device. In this way, the pair of wireless earphones 100 may directly send a volume adjustment message to the first electronic device. The volume adjustment message carries a first volume value and an identifier of the pair of wireless earphones 100. The volume adjustment message indicates the first electronic device to adjust the output volume value (the volume value output to the pair of wireless earphones 100) to the first volume value.

It may be understood that, an electronic device of which a device model is the same as the first electronic device is determined as the second electronic device, without converting the volume value to a corresponding amplitude and frequency. This simplifies a process of adjusting the volume of the pair of wireless earphones 100.

Scenario 3: The pair of wireless earphones 100 do not query the electronic device of which a device model is the same as the device model of the first electronic device in the list of devices, and determines the electronic device that had been connected recently as the second electronic device before the pair of wireless earphones 100 establish a communication connection to the first electronic device.

It may be learned that, in Scenario 3, the second electronic device is the electronic device of which a device model is different from the device model of the first electronic device. In this way, the pair of wireless earphones 100 may determine an amplitude and a frequency based on the first volume value and a second unit volume, and send a volume adjustment message to the first electronic device. The volume adjustment message carries the amplitude, the frequency, and an identifier of the pair of wireless earphones 100. The volume adjustment message indicates the first electronic device to adjust, to a second volume value, the volume output to the pair of wireless earphones 100. The second volume value is a volume value determined by the first electronic device based on the amplitude, the frequency, and a pre-stored first unit volume.

That is, although the pair of wireless earphones 100 do not query the electronic device of which a device model is the same as the device model of the first electronic device, the pair of wireless earphones 100 may further adjust the output volume based on the conventional volume value of the electronic device of another model, to implement an automatic adjustment of the volume and simplify a user operation.

It may be learned that, in the foregoing three scenarios, the pair of wireless earphones 100 may automatically adjust the output volume based on a conventional volume value of another electronic device. This reduces complexity of an operation, and improves user experience. However, in a possible implementation, the pair of wireless earphones 100 may establish a communication connection to the first electronic device, and store the conventional volume value of the first electronic device. In this way, the pair of wireless earphones 100 may directly read the conventional volume value of the first electronic device, and adjust the output volume based on the conventional volume value, which is simpler and faster.

For example, in response to detecting that the pair of wireless earphones 100 establish a communication connection to the first electronic device, the pair of wireless earphones 100 may further obtain the identifier of the first electronic device, and query whether there is a fourth volume value (that is, the conventional volume value of the first electronic device). If the pair of wireless earphones 100 query the conventional volume value of the first electronic device, the pair of wireless earphones 100 may send the volume adjustment message to the first electronic device. The volume adjustment message carries the conventional volume value of the first electronic device. In response to the volume adjustment message, the first electronic device adjusts the playback volume to the playback volume corresponding to the conventional volume value. In this way, effect of adjusting the playback volume of the pair of wireless earphones 100 is achieved.

If the pair of wireless earphones 100 do not query the conventional volume value of the first electronic device, the pair of wireless earphones 100 may obtain the first volume value based on the foregoing descriptions again, and send an audio adjustment message to the first electronic device. For the process in which the pair of wireless earphones 100 obtain the first volume value and sends the audio adjustment message to the first electronic device, refer to the foregoing descriptions. Details are not described herein.

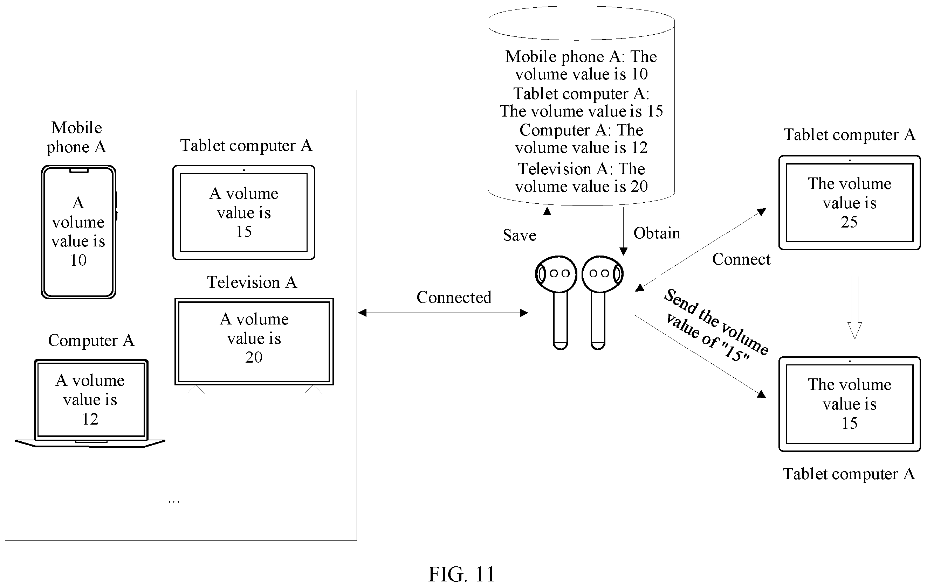

For example, as shown in FIG. 11, the pair of wireless earphones 100 have established a communication connection to a mobile phone A, a computer A, a tablet computer A, and a television A, and had separately stored conventional volume values of the mobile phone A, the computer A, the tablet computer A, and the television A. If the pair of wireless earphones 100 establish a communication connection to the tablet computer A (the first electronic device) again, the pair of wireless earphones 100 may obtain a conventional volume value of the tablet computer A based on an identifier of the tablet computer A. Then, the pair of wireless earphones 100 may set an output volume value of the tablet computer A based on the conventional volume value of the tablet computer A, to enable an output volume of the pair of wireless earphones 100 to achieve effect that is comfortable for the user.

It may be learned from the foregoing description that, after the pair of wireless earphones 100 establish a communication connection to the first electronic device, the output volume may be adjusted in the following manners:
Manner 1: Obtain the conventional volume value of the first electronic device, and adjust the output volume of the first electronic device based on the conventional volume value of the first electronic device.
Manner 2: Obtain the conventional volume value of the second electronic device, and adjust the output volume of the first electronic device based on the conventional volume value of the second electronic device. The device model of the second electronic device is the same as the device model of the first electronic device.
Manner 3: Obtain the conventional volume value of the second electronic device, calculate the amplitude and the frequency that are corresponding to the conventional volume value, and adjust the output volume based on the amplitude and the frequency. The device model of the second electronic device is different from the device model of the first electronic device.

It should be noted that the three manners may have no clear priority, and the pair of wireless earphones 100 may select any manner as the manner of adjusting the output volume.

However, in another optional implementation, the pair of wireless earphones 100 may first determine whether there is the first electronic device in the list of devices. If there is the first electronic device in the list of devices, the output volume may be adjusted in Manner 1. If there is no first electronic device in the list of devices, it may be determined whether there is the electronic device of which a device model is the same as the device model of the first electronic device in the list of devices. If there is the electronic device of which a device model is the same as the device model of the first electronic device in the list of devices, the output volume may be adjusted in Manner 2. If there is no electronic device of which a device model is the same as the device model of the first electronic device in the list of devices, the output volume may be adjusted in Manner 3. In this way, the output volume may be preferentially adjusted based on a conventional volume value of the same device model, to reduce related procedures of calculating the amplitude and the frequency that are corresponding to the conventional volume value, simplify an adjustment manner, and reduce the power consumption of the pair of wireless earphones 100.

It should be noted that the foregoing descriptions are operations performed when the pair of wireless earphones 100 detect that a communication connection is established to the first electronic device. In an optional implementation, the pair of wireless earphones 100 may further obtain the first volume value and adjust the playback volume only when the pair of wireless earphones 100 detect that a communication connection is established to the first electronic device and the terminal device plays an audio signal. In this way, the pair of wireless earphones 100 may adjust the volume only when the audio signal is played, to avoid waste of processor resources and power caused by an adjustment on the volume when the pair of wireless earphones 100 is connected to the electronic device.

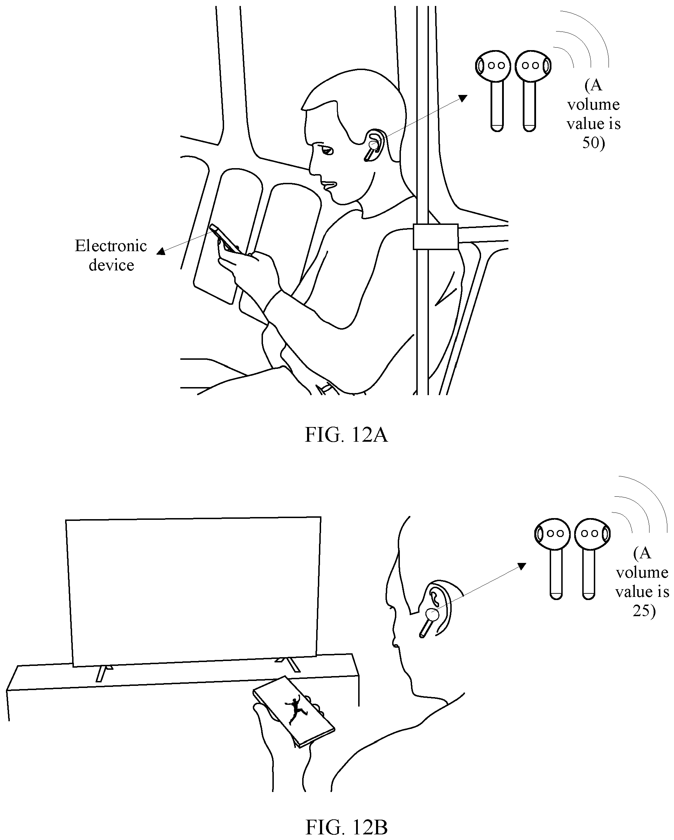

Considering that the user has different demands for the volume in different use scenarios, the pair of wireless earphones 100 may further determine a conventional volume value for each electronic device in the different scenarios. For example, as shown in FIG. 12A, when the user takes a bus, an external environment is noisy, and a volume value used by the user is usually larger. As shown in FIG. 12B, when the user is at home, an external environment is quiet, a volume value used by the user is usually smaller.

In this way, in an optional implementation, the pair of wireless earphones 100 may determine the use scenario of the pair of wireless earphones 100 based on any combination of the following several pieces of information: information about ambient noise, information about a movement, information about light intensity, information about an application, and the like. The information about ambient noise may indicate the noisiness of an environment around the user. The information about a movement may indicate that a movement state of the user, that is, a static state, a fast-running state, a jogging state, and the like. The information about light intensity may indicate whether a current state is a nighttime state. The information about an application may indicate a specific item, such as a voice call, listening to a song, watching a video, and the like. For example, when the information about ambient noise indicates that the environment around the user is relatively quiet, the information about a movement indicates that the user is in the static state, and the information about light intensity indicates that it is in the nighttime state, it is determined that the electronic device is located in Scenario 1. The pair of wireless earphones 100 may obtain the conventional volume value of the electronic device in Scenario 1.

In this way, the pair of wireless earphones 100 may obtain a conventional volume value of the electronic device (for example, the first electronic device and the second electronic device) in a plurality of scenarios, and store a correspondence among the identifier, the device model, the scenario, and the conventional volume value. For example, the correspondence stored by the pair of wireless earphones 100 may be shown in Table 3:

**Table 3**

| MAC address | Device model | Scenario | Conventional volume value |
|---|---|---|---|
| 5C-FF-35-8B-95-B5 | Honor V40 | Scenario 1 | 31 |
| 5C-FF-35-8B-95-B5 | Honor V40 | Scenario 2 | 28 |
| 5C-FF-35-8B-95-B5 | Honor V40 | Scenario 3 | 69 |
| 8C-7B-9D-43-50-89 | Honor tablet 7 | Scenario 1 | 27 |
| 8C-7B-9D-43-50-89 | Honor tablet 7 | Scenario 2 | 52 |
| 8C-7B-9D-43-50-89 | Honor tablet 7 | Scenario 3 | 21 |

As shown in Table 3, for a device of which the MAC address is "5C-FF-35-8B-95-B5", if the device is located in Scenario 1, a corresponding conventional volume value of the device is 31; and for a device of which the MAC address is "8C-7B-9D-43-50-89", if the device is located in Scenario 3, a corresponding conventional volume value of the device is 21.

In this way, when the pair of wireless earphones 100 adjust the playback volume based on a conventional volume value of another electronic device, a factor of a scenario may be further considered. For example, after determining the second electronic device, the pair of wireless earphones 100 may determine a scenario in which the pair of wireless earphones 100 are located, determine a corresponding conventional volume value based on the identifier of the second electronic device and the scenario, and adjust the playback volume based on the conventional volume value.

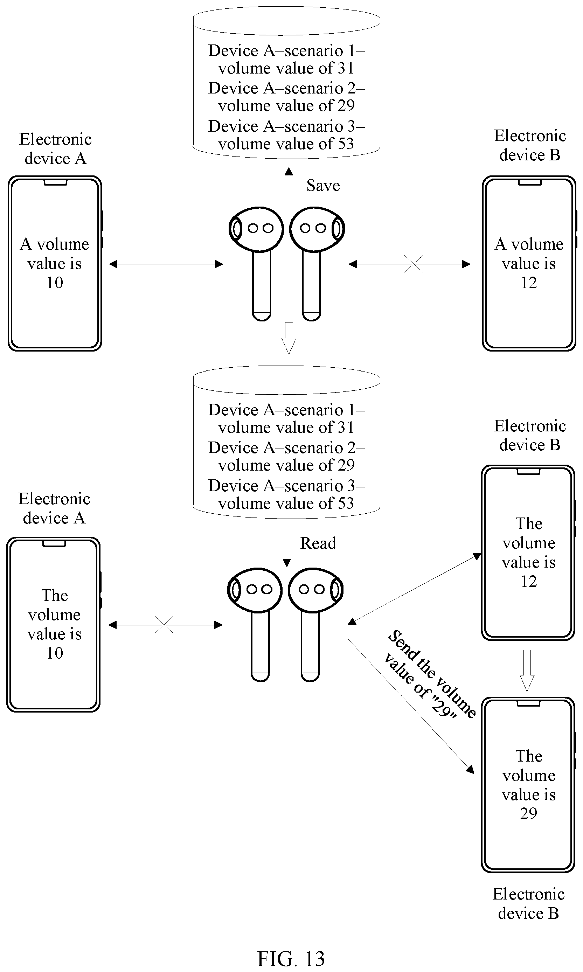

For example, as shown in FIG. 13, the device model of the electronic device B is the same as the device model of the electronic device A. When being connected to the electronic device A, the pair of wireless earphones 100 are disconnected from the electronic device B. The pair of wireless earphones 100 may store conventional volume values of the electronic device A in different scenarios. When the electronic device A is located in Scenario 1, a corresponding conventional volume value is 31, the electronic device A is located in Scenario 2, a corresponding conventional volume value is 29, and the electronic device A is located in Scenario 3, a corresponding conventional volume value is 53. After the pair of wireless earphones 100 are disconnected from the electronic device A and establishes the connection to the electronic device B, the pair of wireless earphones 100 may determine that a use scenario in which the pair of wireless earphones 100 are located is Scenario 2. In this way, the pair of wireless earphones 100 may determine the volume value 29 as the first volume value based on the identifier of the electronic device A and the determined use scenario, and transmit the volume adjustment message to the electronic device B. The volume adjustment message carries the volume value 29. In response to the volume adjustment message, the electronic device B adjusts the volume value to 29. In this way, the output volume of the pair of wireless earphones 100 is a playback volume corresponding to the volume value 29.

It may be learned that, by synthesizing the descriptions of the use scenario of the pair of wireless earphones 100, the use habit of the user can more accurately met in different scenarios, to meet a personalized demand of the user.

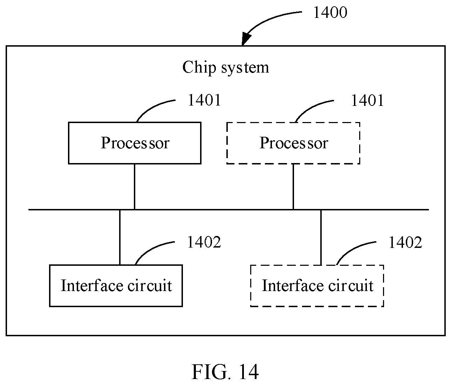

An embodiment of this application provides a chip system 1400. As shown in FIG. 14, a chip system 1400 includes at least one processor 1401 and at least one interface circuit 1402. The processor 1401 and the interface circuit 1402 can be connected to each other by using a line. For example, the interface circuit 1402 can be configured to receive signals from other apparatuses (such as a memory of a terminal device). In another example, the interface circuit 1402 can be configured to send signals to other apparatuses (for example, the processor 1401).

For example, the interface circuit 1402 may read instructions stored in the memory of the terminal device and send the instructions to the processor 1401. When instructions are executed by the processor 1401, a terminal device (such as the pair of wireless earphones 100 shown in FIG. 2) may be caused to perform all of the steps in the foregoing embodiments.

For another example, the interface circuit 1402 may read instructions stored in the memory of a server and send the instructions to the processor 1401. When executed by the processor 1401, the instruction causes the server to perform each step in the foregoing embodiment.

The foregoing descriptions about implementations allow a person skilled in the art to understand that, for convenience and conciseness of description, division of the foregoing functional modules is taken as an example for illustration. In actual application, the foregoing functions may be assigned to different functional modules for completion as required. In other words, an internal structure of the apparatus is divided into different functional modules to implement all or some of the functions described above. For a specific work process of the system, apparatus, and unit described above, a corresponding process in the foregoing method embodiments may be referred to, and the details are not described herein again.

In embodiments of this application, functional units in embodiments may be integrated into one processing unit, or each of the units may exist alone physically, or two or more units may be integrated into one unit. The integrated unit may be implemented in a form of hardware or a software function unit.

When the integrated unit is implemented in a form of a software functional unit and sold or used as an independent product, the integrated unit may be stored in a computer-readable storage medium. Based on such an understanding, the technical solutions in embodiments of this application essentially, or the part contributing to the existing technology, or all or some of the technical solutions may be implemented in the form of a software product. The computer software product is stored in a storage medium and includes several instructions for instructing a computer device (which may be a personal computer, a server, a network device, or the like) or the processor to perform all or some of the steps of the methods described in embodiments of this application. The foregoing storage medium includes any medium that can store program code, for example, a flash memory, a removable hard disk, a read-only memory, a random access memory, a magnetic disk, or an optical disc.

The foregoing descriptions are merely specific implementations of embodiments of this application, but are not intended to limit the protection scope of embodiments of this application. Therefore, the protection scope of embodiments of this application shall be subject to the protection scope of the claims.

## Claims

1. A volume adjustment method, applied to a terminal device (100) having a function of playing back an audio, wherein the method comprises:
obtaining (S102), by the terminal device, a first volume value in response to detecting (S101) that the terminal device establishes a communication connection to a first electronic device (200), wherein the first volume value is a volume value that conforms to a use habit of a user when the user uses a second electronic device, and the second electronic device is an electronic device that had been connected to the terminal device; and
sending (S104), by the terminal device, a volume adjustment message to the first electronic device, wherein the volume adjustment message carries first volume value information for indicating the first electronic device to adjust a playback volume to a playback volume corresponding to the first volume value.

2. The volume adjustment method according to claim 1, wherein if a device model of the first electronic device is the same as a device model of the second electronic device, the volume adjustment message carries the first volume value; or if a device model of the first electronic device is different from a device model of the second electronic device, the volume adjustment message carries the playback volume corresponding to the first volume value or a frequency and an amplitude that are corresponding to the first volume value.

3. The volume adjustment method according to claim 1 or 2, wherein the sending (S104), by the terminal device, a volume adjustment message to the first electronic device comprises:
if the device model of the first electronic device is the same as the device model of the second electronic device, sending (S104), by the terminal device, the volume adjustment message to the first electronic device, wherein the volume adjustment message carries the first volume value and an identifier of the terminal device, and the volume adjustment message indicates the first electronic device to adjust a volume value output to the terminal device to the first volume value.

4. The volume adjustment method according to claim 1 or 2, wherein the sending, by the terminal device, a volume adjustment message to the first electronic device comprises:
if the device model of the first electronic device is different from the device model of the second electronic device, determining, by the terminal device, the amplitude and the frequency that are corresponding to the first volume value; and
sending, by the terminal device, the volume adjustment message to the first electronic device, wherein the volume adjustment message carries the amplitude and the frequency, the volume adjustment message indicates the first electronic device to adjust, to a second volume value, a volume value output to the terminal device, the second volume value is a volume value that is output by the first electronic device and that satisfies the amplitude and the frequency, and a playback volume corresponding to the second volume value is the same as or approximate to the playback volume corresponding to the first volume value.

5. The volume adjustment method according to claim 1 or 2, wherein the sending, by the terminal device, a volume adjustment message to the first electronic device comprises:
if the device model of the first electronic device is different from the device model of the second electronic device, determining, by the terminal device, a first playback volume based on the first volume value and a pre-stored first unit volume, wherein the first unit volume is a playback volume corresponding to a unit volume value of the second electronic device; and
sending, by the terminal device, the volume adjustment information to the first electronic device, wherein the volume adjustment information carries the first playback volume, the volume adjustment information indicates the first electronic device to adjust, to a second volume value, a volume value output to the terminal device, the second volume value is a volume value that is determined by the first electronic device based on the first playback volume and a pre-stored second unit volume, the second unit volume is a playback volume corresponding to a unit volume value of the first electronic device, and a playback volume corresponding to the second volume value is the same as or approximate to the first playback volume.

6. The volume adjustment method according to claim 3, wherein the method further comprises:
obtaining, by the terminal device, a third volume value, wherein the third volume value is a volume value output to the terminal device before the first electronic device performs volume adjustment; and
the sending, by the terminal device, a volume adjustment message to the first electronic device comprises:
if the first volume value is different from the third volume value, sending, by the terminal device, the volume adjustment message to the first electronic device.

7. The volume adjustment method according to claim 4, wherein the method further comprises:
obtaining, by the terminal device, a third volume value, wherein the third volume value is a volume output to the terminal device before the first electronic device performs volume adjustment; and
the sending, by the terminal device, a volume adjustment message to the first electronic device comprises: if the amplitude corresponding to the first volume value is different from an amplitude corresponding to the third volume value and the frequency corresponding to the first volume value is different from a frequency corresponding to the third volume value, sending, by the terminal device, the volume adjustment message to the first electronic device.

8. The volume adjustment method according to claim 5, wherein the method further comprises:
obtaining, by the terminal device, a third volume value, wherein the third volume value is a volume output to the terminal device before the first electronic device performs volume adjustment; and
the sending, by the terminal device, a volume adjustment message to the first electronic device comprises:
if the first playback volume is different from a playback volume corresponding to the third volume value, sending, by the terminal device, the volume adjustment message to the first electronic device.

9. The volume adjustment method according to any one of claims 1 to 8, wherein the method further comprises:
obtaining an identifier of the first electronic device;
querying whether there is a fourth volume value, wherein the fourth volume value is a volume value that conforms to a use habit of the user when the user uses the first electronic device; and
adjusting, by the terminal device, the playback volume based on the fourth volume value in response to detecting that the terminal device establishes a communication connection to the first electronic device and that the fourth volume value is queried; and
the obtaining, by the terminal device, a first volume value in response to detecting that the terminal device establishes a communication connection to a first electronic device comprises:
obtaining, by the terminal device, the first volume value in response to detecting that the terminal device establishes a communication connection to the first electronic device and that the fourth volume value is not queried.

10. The volume adjustment method according to any one of claims 1 to 8, wherein the obtaining, by the terminal device, a first volume value comprises:
querying, by the terminal device, whether there is an electronic device of which a device model is the same as the device model of the first electronic device in a pre-stored list of devices, wherein the pre-stored list of devices comprises an identifier, a device model, and a connection time point of an electronic device that had been connected to the terminal device;
if there is the electronic device of which a device model is the same as the device model of the first electronic device in the list of devices, determining the electronic device of which a device model is the same as the device model of the first electronic device as the second electronic device;
if there is no electronic device of which a device model is the same as the device model of the first electronic device in the list of devices, determining an electronic device that had been connected recently as the second electronic device; and
obtaining a first volume value of the second electronic device.

11. The volume adjustment method according to any one of claims 1 to 10, the terminal device having a function of playing back a video.

12. A terminal device, wherein the terminal device comprises: a wireless communication module (130), a memory (120), and one or more processors (110), and the wireless communication module, the memory, and the processor are coupled; and
the memory is configured to store computer program code, the computer program code comprises computer instructions, and when the computer instructions are executed by the processor, the electronic device is enabled to perform the method according to any one of claims 1 to 11.

13. A computer-readable storage medium, comprising computer instructions, wherein
when the computer instructions are run on a terminal device, the terminal device is enabled to perform the method according to any one of claims 1 to 11.

## Patentansprüche

1. Ein Lautstärkeanpassungsverfahren, das auf ein Endgerät (100) angewendet wird, welches über eine Audio-Wiedergabefunktion verfügt, wobei das Verfahren Folgendes umfasst:
Ermitteln (S102) durch das Endgerät eines ersten Lautstärkewertes als Reaktion auf das Erkennen (S101), dass das Endgerät eine Kommunikationsverbindung zu einem ersten elektronischen Gerät (200) herstellt, wobei der erste Lautstärkewert ein Wert ist, der den Nutzungsgewohnheiten eines Benutzers beim Gebrauch eines zweiten elektronischen Geräts entspricht, und bei dem das zweite elektronische Gerät ein zuvor mit dem Endgerät verbundenes Gerät ist; und
Senden (S104) einer Lautstärkenachricht durch das Endgerät an das erste elektronische Gerät, wobei die Lautstärkenachricht Informationen über den ersten Lautstärkewert enthält, die das erste elektronische Gerät anweisen, die Wiedergabelautstärke auf die Wiedergabelautstärke entsprechend dem ersten Lautstärkewert einzustellen.

2. Das Lautstärkeanpassungsverfahren nach Anspruch 1, wobei die Lautstärkenachricht den ersten Lautstärkewert enthält, wenn das Gerätemodell des ersten elektronischen Geräts mit dem des zweiten elektronischen Geräts übereinstimmt; oder, wenn das Gerätemodell des ersten elektronischen Geräts von dem des zweiten elektronischen Geräts abweicht, die Wiedergabelautstärke enthält, die dem ersten Lautstärkewert entspricht, oder eine Frequenz und eine Amplitude, die mit dem ersten Lautstärkewert in Zusammenhang stehen.

3. Das Lautstärkeanpassungsverfahren nach Anspruch 1 oder 2, wobei das Senden (S104) einer Lautstärkenachricht durch das Endgerät an das erste elektronische Gerät Folgendes umfasst:
wenn das Gerätemodell des ersten elektronischen Geräts mit dem des zweiten elektronischen Geräts identisch ist, sendet das Endgerät (S104) die Lautstärkenachricht an das erste elektronische Gerät, wobei die Lautstärkenachricht den ersten Lautstärkewert sowie einen Bezeichner des Endgeräts enthält und das erste elektronische Gerät anweist, den an das Endgerät ausgegebenen Lautstärkewert auf den ersten Lautstärkewert einzustellen.

4. Das Lautstärkeanpassungsverfahren nach Anspruch 1 oder 2, wobei das Senden einer Lautstärkenachricht durch das Endgerät an das erste elektronische Gerät Folgendes umfasst:
wenn das Gerätemodell des ersten elektronischen Geräts von dem des zweiten elektronischen Geräts abweicht, ermittelt das Endgerät die Amplitude und die zur ersten Lautstärkewert gehörende Frequenz; und
Senden einer Lautstärkeeinstellungsnachricht durch das Endgerät an das erste elektronische Gerät, wobei die Lautstärkeeinstellungsnachricht die Amplitude und die Frequenz enthält, wobei die Lautstärkeeinstellungsnachricht angibt, dass das erste elektronische Gerät den an das Endgerät ausgegebenen Lautstärkewert auf einen zweiten Lautstärkewert anpassen soll, wobei der zweite Lautstärkewert ein vom ersten elektronischen Gerät ausgegebener Lautstärkewert ist, der die Amplitude und die Frequenz erfüllt, und eine Wiedergabelautstärke, die dem zweiten Lautstärkewert entspricht, gleich oder annähernd gleich der Wiedergabelautstärke ist, die dem ersten Lautstärkewert entspricht.

5. Das Lautstärkeeinstellungsverfahren nach Anspruch 1 oder 2, wobei das Senden einer Lautstärkeeinstellungsnachricht durch das Endgerät an das erste elektronische Gerät Folgendes umfasst:
Wenn das Gerätemodell des ersten elektronischen Geräts sich vom Gerätemodell des zweiten elektronischen Geräts unterscheidet, wird durch das Endgerät eine erste Wiedergabelautstärke basierend auf dem ersten Lautstärkewert und einer vorgespeicherten ersten Einheitslautstärke bestimmt, wobei die erste Einheitslautstärke eine Wiedergabelautstärke darstellt, die einem Einheitslautstärkewert des zweiten elektronischen Geräts entspricht; und
Senden von Lautstärkeeinstellungsinformationen durch das Endgerät an das erste elektronische Gerät, wobei die Lautstärkeeinstellungsinformationen die erste Wiedergabelautstärke enthalten, wobei die Lautstärkeeinstellungsinformationen angeben, dass das erste elektronische Gerät den an das Endgerät ausgegebenen Lautstärkewert auf einen zweiten Lautstärkewert anpassen soll, wobei der zweite Lautstärkewert ein vom ersten elektronischen Gerät bestimmter Lautstärkewert ist, der auf der ersten Wiedergabelautstärke und einer vorgespeicherten zweiten Einheitslautstärke basiert, die zweite Einheitslautstärke eine Wiedergabelautstärke darstellt, die einem Einheitslautstärkewert des ersten elektronischen Geräts entspricht, und eine Wiedergabelautstärke, die dem zweiten Lautstärkewert entspricht, gleich oder annähernd gleich der ersten Wiedergabelautstärke ist.

6. Das Lautstärkeeinstellungsverfahren nach Anspruch 3, wobei das Verfahren ferner Folgendes umfasst:
Ermitteln eines dritten Lautstärkewerts durch das Endgerät, wobei der dritte Lautstärkewert ein an das Endgerät ausgegebener Lautstärkewert ist, bevor das erste elektronische Gerät die Lautstärkeeinstellung durchführt; und
Das Senden einer Lautstärkeeinstellungsnachricht durch das Endgerät an das erste elektronische Gerät umfasst:
Wenn sich der erste Lautstärkewert vom dritten Lautstärkewert unterscheidet, sendet das Endgerät die Lautstärkeeinstellungsnachricht an das erste elektronische Gerät.

7. Das Lautstärkeeinstellungsverfahren nach Anspruch 4, wobei das Verfahren ferner Folgendes umfasst:
Ermitteln eines dritten Lautstärkewerts durch das Endgerät, wobei der dritte Lautstärkewert eine Ausgabe an das Endgerät ist, bevor das erste elektronische Gerät die Lautstärkeeinstellung durchführt; und
Das Senden einer Lautstärkeanpassungsnachricht durch das Endgerät an das erste elektronische Gerät umfasst:
Wenn die Amplitude, die dem ersten Lautstärkewert entspricht, von der Amplitude abweicht, die dem dritten Lautstärkewert entspricht, und die Frequenz, die dem ersten Lautstärkewert entspricht, von der Frequenz abweicht, die dem dritten Lautstärkewert entspricht, sendet das Endgerät die Lautstärkeanpassungsnachricht an das erste elektronische Gerät.

8. Das Lautstärkeanpassungsverfahren gemäß Anspruch 5, wobei das Verfahren ferner Folgendes umfasst:
Das Erhalten eines dritten Lautstärkewerts durch das Endgerät, wobei der dritte Lautstärkewert eine Lautstärke ist, die an das Endgerät ausgegeben wurde, bevor das erste elektronische Gerät eine Lautstärkeanpassung durchführt; und
Das Senden einer Lautstärkeanpassungsnachricht durch das Endgerät an das erste elektronische Gerät umfasst:
Wenn die erste Wiedergabelautstärke sich von einer Wiedergabelautstärke unterscheidet, die dem dritten Lautstärkewert entspricht, sendet das Endgerät die Lautstärkeanpassungsnachricht an das erste elektronische Gerät.

9. Das Lautstärkeanpassungsverfahren gemäß einem der Ansprüche 1 bis 8, wobei das Verfahren ferner Folgendes umfasst:
Erhalten einer Kennung des ersten elektronischen Geräts;
Abfragen, ob ein vierter Lautstärkewert existiert, wobei der vierte Lautstärkewert ein Lautstärkewert ist, der einer Nutzungsgewohnheit des Benutzers entspricht, wenn der Benutzer das erste elektronische Gerät verwendet; und
Anpassen der Wiedergabelautstärke durch das Endgerät auf Basis des vierten Lautstärkewerts als Reaktion auf die Feststellung, dass das Endgerät eine Kommunikationsverbindung zum ersten elektronischen Gerät herstellt und der vierte Lautstärkewert abgefragt wird; und
Das Erfassen eines ersten Lautstärkewerts durch das Endgerät als Reaktion auf die Feststellung, dass das Endgerät eine Kommunikationsverbindung zu einem ersten elektronischen Gerät herstellt, umfasst:
Das Erfassen des ersten Lautstärkewerts durch das Endgerät, wenn erkannt wird, dass das Endgerät eine Kommunikationsverbindung zu dem ersten elektronischen Gerät herstellt und der vierte Lautstärkewert nicht abgefragt wird.

10. Das Lautstärkeanpassungsverfahren gemäß einem der Ansprüche 1 bis 8, wobei das Erfassen eines ersten Lautstärkewerts durch das Endgerät Folgendes umfasst:
Abfragen durch das Endgerät, ob es ein elektronisches Gerät gibt, dessen Gerätemodell mit dem Gerätemodell des ersten elektronischen Geräts in einer vorab gespeicherten Geräteliste übereinstimmt, wobei die vorab gespeicherte Geräteliste eine Kennung, ein Gerätemodell und einen Verbindungszeitpunkt eines elektronischen Geräts umfasst, das zuvor mit dem Endgerät verbunden war;
Wenn es in der Geräteliste ein elektronisches Gerät gibt, dessen Gerätemodell mit dem Gerätemodell des ersten elektronischen Geräts übereinstimmt, wird das elektronische Gerät mit demselben Gerätemodell wie das erste elektronische Gerät als zweites elektronisches Gerät bestimmt;
Wenn es in der Geräteliste kein elektronisches Gerät gibt, dessen Gerätemodell mit dem Gerätemodell des ersten elektronischen Geräts übereinstimmt, wird das zuletzt verbundene elektronische Gerät als zweites elektronisches Gerät bestimmt; und
Abrufen eines ersten Lautstärkewerts des zweiten elektronischen Geräts.

11. Das Verfahren zur Lautstärkeregelung gemäß einem der Ansprüche 1 bis 10, wobei das Endgerät eine Funktion zur Wiedergabe eines Videos besitzt.

12. Ein Endgerät, wobei das Endgerät umfasst: ein drahtloses Kommunikationsmodul (130), einen Speicher (120) und einen oder mehrere Prozessoren (110), wobei das drahtlose Kommunikationsmodul, der Speicher und der Prozessor gekoppelt sind; und
Der Speicher ist dazu konfiguriert, Computerprogrammcodes zu speichern, die Computerprogrammcodes enthalten Computeranweisungen, und wenn die Computeranweisungen vom Prozessor ausgeführt werden, ist das elektronische Gerät in der Lage, das Verfahren gemäß einem der Ansprüche 1 bis 11 auszuführen.

13. Ein computerlesbares Speichermedium, das Computeranweisungen umfasst, wobei
wenn die Computeranweisungen auf einem Endgerät ausgeführt werden, das Endgerät in der Lage ist, das Verfahren gemäß einem der Ansprüche 1 bis 11 auszuführen.

## Revendications

1. Procédé de réglage du volume, appliqué à un dispositif terminal (100) doté d'une fonction de lecture audio, ledit procédé comprenant :
obtenir (S102), par le dispositif terminal, une première valeur de volume en réponse à la détection (S101) que le dispositif terminal établit une connexion de communication avec un premier dispositif électronique (200), la première valeur de volume étant une valeur de volume conforme à l'habitude d'utilisation d'un utilisateur lorsque celui-ci utilise un deuxième dispositif électronique, ledit deuxième dispositif électronique étant un dispositif électronique qui avait déjà été connecté au dispositif terminal ; et
envoyer (S104), par le dispositif terminal, un message de réglage du volume au premier dispositif électronique, ledit message de réglage du volume transportant une information de première valeur de volume pour indiquer au premier dispositif électronique d'ajuster le volume de lecture à un volume de lecture correspondant à la première valeur de volume.

2. Procédé de réglage du volume selon la revendication 1, dans lequel, si le modèle de l'appareil du premier dispositif électronique est identique à celui du deuxième dispositif électronique, le message de réglage du volume transporte la première valeur de volume ; ou si le modèle de l'appareil du premier dispositif électronique est différent de celui du deuxième dispositif électronique, le message de réglage du volume transporte le volume de lecture correspondant à la première valeur de volume ou une fréquence et une amplitude correspondant à la première valeur de volume.

3. Procédé de réglage du volume selon la revendication 1 ou 2, dans lequel l'envoi (S104), par le dispositif terminal, d'un message de réglage du volume au premier dispositif électronique comprend :
si le modèle de l'appareil du premier dispositif électronique est identique à celui du deuxième dispositif électronique, envoyer (S104), par le dispositif terminal, le message de réglage du volume au premier dispositif électronique, ledit message transportant la première valeur de volume et un identifiant du dispositif terminal, et le message de réglage du volume indiquant au premier dispositif électronique d'ajuster la valeur de volume de sortie vers le dispositif terminal à la première valeur de volume.

4. Procédé de réglage du volume selon la revendication 1 ou 2, dans lequel l'envoi, par le dispositif terminal, d'un message de réglage du volume au premier dispositif électronique comprend :
si le modèle de l'appareil du premier dispositif électronique est différent de celui du deuxième dispositif électronique, déterminer, par le dispositif terminal, l'amplitude et la fréquence correspondant à la première valeur de volume ; et
envoi, par le dispositif terminal, du message de réglage du volume au premier dispositif électronique, ledit message de réglage du volume comprenant l'amplitude et la fréquence, le message de réglage du volume indiquant au premier dispositif électronique de régler, à une seconde valeur de volume, une valeur de volume diffusée vers le dispositif terminal, la seconde valeur de volume étant une valeur de volume qui est diffusée par le premier dispositif électronique et qui satisfait l'amplitude et la fréquence, et un volume de lecture correspondant à la seconde valeur de volume étant identique ou approximatif au volume de lecture correspondant à la première valeur de volume.

5. Le procédé de réglage du volume selon la revendication 1 ou 2, dans lequel l'envoi, par le dispositif terminal, d'un message de réglage du volume au premier dispositif électronique comprend :
si le modèle de l'appareil du premier dispositif électronique est différent de celui du second dispositif électronique, détermination, par le dispositif terminal, d'un premier volume de lecture sur la base de la première valeur de volume et d'un premier volume unitaire pré-stocké, le premier volume unitaire étant un volume de lecture correspondant à une valeur unitaire de volume du second dispositif électronique ; et
envoi, par le dispositif terminal, des informations de réglage du volume au premier dispositif électronique, lesdites informations de réglage du volume comprenant le premier volume de lecture, les informations de réglage du volume indiquant au premier dispositif électronique de régler, à une seconde valeur de volume, une valeur de volume diffusée vers le dispositif terminal, la seconde valeur de volume étant une valeur déterminée par le premier dispositif électronique sur la base du premier volume de lecture et d'un second volume unitaire pré-stocké, le second volume unitaire étant un volume de lecture correspondant à une valeur unitaire de volume du premier dispositif électronique, et un volume de lecture correspondant à la seconde valeur de volume étant identique ou approximatif au premier volume de lecture.

6. Le procédé de réglage du volume selon la revendication 3, dans lequel le procédé comprend en outre :
obtention, par le dispositif terminal, d'une troisième valeur de volume, ladite troisième valeur de volume correspondant à une valeur diffusée vers le dispositif terminal avant que le premier dispositif électronique n'effectue un ajustement de volume ; et
l'envoi, par le dispositif terminal, d'un message de réglage du volume au premier dispositif électronique comprend :
si la première valeur de volume diffère de la troisième valeur de volume, envoi, par le dispositif terminal, du message de réglage du volume au premier dispositif électronique.

7. Le procédé de réglage du volume selon la revendication 4, dans lequel le procédé comprend en outre :
obtention, par le dispositif terminal, d'une troisième valeur de volume, ladite troisième valeur de volume correspondant au volume diffusé vers le dispositif terminal avant que le premier dispositif électronique n'effectue l'ajustement du volume ; et
l'envoi, par le dispositif terminal, d'un message d'ajustement du volume au premier appareil électronique comprend :
si l'amplitude correspondant à la première valeur de volume est différente de l'amplitude correspondant à la troisième valeur de volume et si la fréquence correspondant à la première valeur de volume est différente de la fréquence correspondant à la troisième valeur de volume, l'envoi, par le dispositif terminal, du message d'ajustement du volume au premier appareil électronique.

8. Le procédé d'ajustement du volume selon la revendication 5, dans lequel le procédé comprend en outre :
l'obtention, par le dispositif terminal, d'une troisième valeur de volume, la troisième valeur de volume étant une valeur de volume émise vers le dispositif terminal avant que le premier appareil électronique n'effectue l'ajustement du volume ; et
l'envoi, par le dispositif terminal, d'un message d'ajustement du volume au premier appareil électronique comprend :
si le premier volume de lecture est différent d'un volume de lecture correspondant à la troisième valeur de volume, l'envoi, par le dispositif terminal, du message d'ajustement du volume au premier appareil électronique.

9. Le procédé d'ajustement du volume selon l'une quelconque des revendications 1 à 8, dans lequel le procédé comprend en outre :
l'obtention d'un identifiant du premier appareil électronique ;
la vérification de l'existence d'une quatrième valeur de volume, la quatrième valeur de volume étant une valeur de volume qui correspond à l'habitude d'utilisation de l'utilisateur lorsqu'il utilise le premier appareil électronique ; et
l'ajustement, par le dispositif terminal, du volume de lecture sur la base de la quatrième valeur de volume en réponse à la détection de l'établissement d'une connexion de communication entre le dispositif terminal et le premier appareil électronique et à la vérification de la quatrième valeur de volume ; et
l'obtention, par le dispositif terminal, d'une première valeur de volume en réponse à la détection de l'établissement d'une connexion de communication entre le dispositif terminal et un premier appareil électronique comprend :
l'obtention, par le dispositif terminal, de la première valeur de volume en réponse à la détection de l'établissement d'une connexion de communication entre le dispositif terminal et le premier appareil électronique et à la non-vérification de la quatrième valeur de volume.

10. Le procédé d'ajustement du volume selon l'une quelconque des revendications 1 à 8, dans lequel l'obtention, par le dispositif terminal, d'une première valeur de volume comprend :
la vérification, par le dispositif terminal, de l'existence d'un appareil électronique dont le modèle de l'appareil est le même que celui du premier appareil électronique dans une liste préenregistrée d'appareils, la liste préenregistrée comprenant un identifiant, un modèle d'appareil et une date de connexion d'un appareil électronique qui a déjà été connecté au dispositif terminal ;
s'il existe un dispositif électronique dont le modèle d'appareil est identique à celui du premier dispositif électronique dans la liste des dispositifs, déterminer le dispositif électronique dont le modèle d'appareil est identique à celui du premier dispositif électronique en tant que second dispositif électronique ;
s'il n'existe aucun dispositif électronique dont le modèle d'appareil est identique à celui du premier dispositif électronique dans la liste des dispositifs, déterminer un dispositif électronique qui a été connecté récemment en tant que second dispositif électronique ; et
obtenir une première valeur de volume du second dispositif électronique.

11. Procédé de réglage du volume selon l'une quelconque des revendications 1 à 10, le dispositif terminal disposant d'une fonction de lecture de vidéo.

12. Dispositif terminal, dans lequel le dispositif terminal comprend : un module de communication sans fil (130), une mémoire (120) et un ou plusieurs processeurs (110), et le module de communication sans fil, la mémoire et le(s) processeur(s) sont couplés ; et
la mémoire est configurée pour stocker un code de programme informatique, le code de programme informatique comprenant des instructions informatiques, et lorsque les instructions informatiques sont exécutées par le processeur, le dispositif électronique est apte à exécuter le procédé selon l'une quelconque des revendications 1 à 11.

13. Support de stockage lisible par ordinateur, comprenant des instructions informatiques, dans lequel
lorsque les instructions informatiques sont exécutées sur un dispositif terminal, le dispositif terminal est apte à exécuter le procédé selon l'une quelconque des revendications 1 à 11.
